(19) Europäisches Patentamt

European Patent Office

Office européen des brevets

(11) **EP 4 560 992 A1**

(12) **EUROPEAN PATENT APPLICATION**
published in accordance with Art. 153(4) EPC

(43) Date of publication:
**28.05.2025 Bulletin 2025/22**

(21) Application number: **22951468.2**

(22) Date of filing: **19.07.2022**

(51) International Patent Classification (IPC):
**H04L 27/00** (2006.01)          **H04L 27/26** (2006.01)
**H04W 64/00** (2009.01)

(52) Cooperative Patent Classification (CPC):
**H04L 27/00; H04L 27/26; H04W 64/00**

(86) International application number:
**PCT/CN2022/106587**

(87) International publication number:
**WO 2024/016190 (25.01.2024 Gazette 2024/04)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.
Beijing 100085 (CN)**

(72) Inventors:
• **ZHANG, Zhenyu
  Beijing 100085 (CN)**
• **ZHAO, Qun
  Beijing 100085 (CN)**
• **WU, Yumin
  Beijing 100085 (CN)**

• **CHI, Liangang
  Beijing 100085 (CN)**
• **HU, Su
  Beijing 100085 (CN)**
• **HU, Zelin
  Beijing 100085 (CN)**
• **YE, Qibin
  Beijing 100085 (CN)**
• **HUANG, Yixuan
  Beijing 100085 (CN)**
• **XIAO, Hongyu
  Beijing 100085 (CN)**

(74) Representative: **Stöckeler, Ferdinand et al
Schoppe, Zimmermann, Stöckeler
Zinkler, Schenk & Partner mbB
Patentanwälte
Radlkoferstrasse 2
81373 München (DE)**

(54) **PARAMETER ESTIMATION METHOD AND APPARATUS BASED ON ORTHOGONAL FREQUENCY DIVISION MULTIPLEXING (OFDM) SIGNAL, AND DEVICE**

(57)     Provided in the present disclosure are a parameter estimation method and apparatus based on an orthogonal frequency division multiplexing (OFDM) signal, and a device. The method comprises: determining, according to a signal subspace matrix of an OFDM signal, a first reference matrix related to a first parameter of a target, wherein the signal subspace matrix comprises information related to at least one parameter; and determining the first parameter on the basis of a first reference feature value of the first reference matrix. By means of the present disclosure, the parameter acquisition cost of a target can be reduced, and the parameter sensing accuracy of the target can be effectively increased.

determining a first reference matrix related to a first parameter of a target according to a signal subspace matrix of the OFDM signal, wherein the signal subspace matrix comprises relevant information of at least one parameter — S101

determining the first parameter based on a first reference eigenvalue of the first reference matrix — S201

FIG. 1

**Description**

## TECHNICAL FIELD

The disclosure relates to the field of communication technology, more particularly, to a parameter estimation method, apparatus and device based on an orthogonal frequency division multiplexing (OFDM) signal.

## BACKGROUND

With the continuous development of science and technology, to meet the wireless requirements in the increasingly updated electromagnetic environment, the number of electronic devices assembled on the same platform is gradually increasing, resulting in many problems such as increased system volume, energy consumption and weight, complex operations, increased redundancy, aggravated electromagnetic interference between the devices, and reduced system performance, etc. The use of multi-function integrated electronic systems is an effective way to solve the above problems. Integrated sensing and communication (ISAC) is one of the most important development directions. The ISAC can be achieved through signal multiplexing and signal fusion. Using the signal fusion, the radar and communication can share the same waveform and system resources. Orthogonal Frequency Division Multiplexing (OFDM) has high spectral efficiency and can effectively resist inter-symbol interference and inter-carrier interference, and it is a basic waveform of the current wireless communication standard. Therefore, OFDM-based ISAC systems have been extensively studied.

In the related art, during the research process of the OFDM-based ISAC systems, radar signal processing algorithms usually need to increase the bandwidth, coherent processing interval (CPI), and the number of antennas to improve the resolution of parameters such as the distance, speed, and horizontal angle of a target.

In this way, the process of obtaining the parameters of the target may consume a lot of bandwidth resources.

## SUMMARY

Embodiments of the present disclosure provide a parameter estimation method and apparatus based on an orthogonal frequency division multiplexing (OFDM) signal, an electronic device, a chip system, a storage medium, a computer program and a computer program product, which can be performed in the field of communication technology, and can reduce the cost of obtaining the parameters of a target and effectively improve the accuracy of parameter sensing of the target.

A first aspect of embodiments of the disclosure provides a parameter estimation method based on an OFDM signal. The method includes: determining a first reference matrix related to a first parameter of a target according to a signal subspace matrix of the OFDM signal, in which the signal subspace matrix includes relevant information of at least one parameter; and determining the first parameter based on a first reference eigenvalue of the first reference matrix.

In an implementation, the method further includes: determining a second reference matrix related to a second parameter of the target according to the signal subspace matrix; and determining the second parameter according to a first eigen matrix of the first reference matrix and the second reference matrix.

In an implementation, the method further includes: determining a number of targets and a signal relevant matrix of the OFDM signal; obtaining eigenvalues of the number of the targets and an eigenvector corresponding to each of the eigenvalues by performing eigenvalue decomposition on the signal relevant matrix; and generating the signal subspace matrix according to the eigenvectors of the number of the targets.

In an implementation, determining the signal relevant matrix of the OFDM signal includes: determining an intermediate parameter based on an OFDM symbol transmitted by an $n^{th}$ subcarrier in an $m^{th}$ OFDM symbol of a $p^{th}$ receiving antenna in a sensing-communication system, in which the intermediate parameter carries the relevant information of the at least one parameter, and the OFDM signal is emitted by a transmitting antenna in the sensing-communication system, $p$ is a positive integer, and $p = 0,1,..., N_R$-1, $N_R$ is a number of receiving antennas; and determining the signal relevant matrix of the OFDM signal according to the intermediate parameter.

In an implementation, the intermediate parameter is represented by:

$$\boldsymbol{\gamma}_{\tilde{p},\tilde{m},\tilde{n}} = \left[ \boldsymbol{\beta}_{\tilde{p},\tilde{m},\tilde{n}}^{T}, \boldsymbol{\beta}_{\tilde{p}+1,\tilde{m},\tilde{n}}^{T}, \cdots, \boldsymbol{\beta}_{\tilde{p}+\tilde{P}-1,\tilde{m},\tilde{n}}^{T} \right]^{T}$$

where, $\beta_{\tilde{p},\tilde{m},\tilde{n}} = \text{vec}(\mathbf{Z}_{\tilde{p},\tilde{m},\tilde{n}})$, vec ($\bullet$ ) represents a vectorization operator,

$$\mathbf{Z}_{\tilde{p},\tilde{m},\tilde{n}} = \begin{bmatrix} z_{\tilde{p},\tilde{m}}(\tilde{n}) & z_{\tilde{p},\tilde{m}}(\tilde{n}+1) & \dots & z_{\tilde{p},\tilde{m}}(\tilde{n}+\tilde{N}-1) \\ z_{\tilde{p},\tilde{m}+1}(\tilde{n}) & z_{\tilde{p},\tilde{m}+1}(\tilde{n}+1) & \dots & z_{\tilde{p},\tilde{m}+1}(\tilde{n}+\tilde{N}-1) \\ \vdots & \vdots & \ddots & \vdots \\ z_{\tilde{p},\tilde{m}+\tilde{M}-1}(\tilde{n}) & z_{\tilde{p},\tilde{m}+\tilde{M}-1}(\tilde{n}+1) & \dots & z_{\tilde{p},\tilde{m}+\tilde{M}-1}(\tilde{n}+\tilde{N}-1) \end{bmatrix}$$

where, $\gamma_{\tilde{p},\tilde{m},\tilde{n}}$ represents the intermediate parameter, $\tilde{m}=0,1,...,M$ - $\tilde{M}$, $\tilde{n}=0,1,...,N$ - $\tilde{N}$, $\tilde{p}=0,1,...,N_R$ - $\tilde{P}$, $\tilde{M}$ represents a size of a smoothing window along the OFDM symbol of the OFDM signal based on a time domain dimension, $\tilde{N}$ represents a size of the smoothing window along the subcarrier based on a frequency domain dimension, $\tilde{P}$ represents a size of the smoothing window along an antenna based on a spatial domain dimension.

In an implementation, determining the first reference matrix related to the first parameter of the target according to the signal subspace matrix of the OFDM signal includes: determining a first to-be-processed matrix and a second to-be-processed matrix related to the first parameter according to the signal subspace matrix; and generating the first reference matrix according to the first to-be-processed matrix and the second to-be-processed matrix.

In an implementation, determining the first to-be-processed matrix and the second to-be-processed matrix related to the first parameter according to the signal subspace matrix includes:

obtaining the first to-be-processed matrix by multiplying a first row selection matrix and the signal subspace matrix; and

obtaining the second to-be-processed matrix by multiplying a second row selection matrix and the signal subspace matrix;

in which, the first to-be-processed matrix does not carry information of the first parameter, and the second to-be-processed matrix carries the information of the first parameter.

In an implementation, generating the first reference matrix according to the first to-be-processed matrix and the second to-be-processed matrix includes: obtaining the first reference matrix by processing the first to-be-processed matrix and the second to-be-processed matrix based on a predefined equation.

In an implementation, determining the second reference matrix related to the second parameter of the target according to the signal subspace matrix includes: determining a third to-be-processed matrix and a fourth to-be-processed matrix related to the second parameter according to the signal subspace matrix; and generating the second reference matrix according to the third to-be-processed matrix and the fourth to-be-processed matrix.

In an implementation, determining the third to-be-processed matrix and the fourth to-be-processed matrix related to the second parameter according to the signal subspace matrix includes: obtaining the third to-be-processed matrix by multiplying a third row selection matrix and the signal subspace matrix; and obtaining the fourth to-be-processed matrix by multiplying a fourth row selection matrix and the signal subspace matrix; in which, the third to-be-processed matrix does not carry information of the second parameter, and the fourth to-be-processed matrix carries the information of the second parameter.

In an implementation, generating the second reference matrix according to the third to-be-processed matrix and the fourth to-be-processed matrix includes: obtaining the second reference matrix by processing the third to-be-processed matrix and the fourth to-be-processed matrix based on a predefined equation.

In an implementation, the first parameter is determined based on a following equation:

$$\hat{R}_i = -\frac{\text{angle}(\lambda_i^R)c}{4\pi\Delta f}, i = 1, 2, \dots, K$$

in which, $\hat{R}_i$ represents the first parameter of the target, $i$ represents an index of the target, $i$ is a positive integer less than or equal to $K$, $K$ represents a number of targets, $angle(\cdot)$ represents obtaining a phase of a complex number, $\lambda_i^R$ represents a first reference eigenvalue corresponding to the target in the first reference matrix $\hat{T}^R$, $c$ represents speed of light, and $\Delta f$ represents a subcarrier spacing of the OFDM signal.

In an implementation, determining the second parameter according to the first characteristic matrix of the first reference matrix and the second reference matrix includes: determining a second reference eigenvalue of the second reference matrix according to the first eigen matrix and the second reference matrix; and determining the second parameter according to the second reference eigenvalue.

In an implementation, the second parameter is determined by a following equation:

$$\hat{v}_i = \frac{angle(\lambda_i^V)c}{4\pi f_c \overline{T}}$$

in which, $\hat{v}_i$ represents the second parameter, $\lambda_i^V$ is the second reference eigenvalue, $angle(\cdot)$ represents obtaining a phase of a complex number, $c$ represents speed of light, $\overline{T}$ is a period of an OFDM symbol of the OFDM signal, and $f_c$ is a carrier frequency.

In an implementation, in which the second parameter is determined by a following equation:

$$\hat{\theta}_i = \arcsin\left[\frac{\lambda\, angle(\lambda_i^\theta)}{2\pi d}\right] * 180 / \pi$$

in which, $\hat{\theta}_i$ represents the second parameter, $\lambda_i^\theta$ is the second reference eigenvalue, $angle(\cdot)$ represents obtaining a phase of a complex number, $\lambda$ represents a wavelength, $d$ represents a spacing between different receiving antennas, and the OFDM signal is received by a receiving antenna.

In an implementation, in which

the first row selection matrix is:

$$J_1^R \overset{\Delta}{=} I_{\tilde{P}} \otimes \left[ I_{\tilde{M}(\tilde{N}-1)}, 0_{\tilde{M}(\tilde{N}-1)\times\tilde{M}} \right]$$ ; and

the second row selection matrix is:

$$J_2^R \overset{\Delta}{=} I_{\tilde{P}} \otimes \left[ 0_{\tilde{M}(\tilde{N}-1)\times\tilde{M}}, I_{\tilde{M}(\tilde{N}-1)} \right]$$ ;

in which, $J_1^R$ represents the first row selection matrix, $J_2^R$ represents the second row selection matrix, $\otimes$ represents a Kronecker product, $I_{\tilde{P}}$ represents an identity matrix with $\tilde{P}$ rows and $\tilde{P}$ columns, $I_{\tilde{M}(\tilde{N}-1)}$ represents an identity matrix with $\tilde{M}(\tilde{N}-1)$ rows and $\tilde{M}(\tilde{N}-1)$ columns, $O_{\tilde{M}(\tilde{N}-1)\times\tilde{M}}$ represents an all-zero matrix with $I_{\tilde{M}(\tilde{N}-1)}$ rows and $\hat{M}$ columns, $\tilde{M}$ represents a size of a smoothing window along an OFDM symbol of the OFDM signal based on a time domain dimension, $\tilde{N}$ represents a size of the smoothing window along a subcarrier based on a frequency domain dimension, and $\tilde{P}$ represents a size of the smoothing window along an antenna based on a spatial domain dimension.

In an implementation, in which,

the third row selection matrix is:

$$J_1^V \overset{\Delta}{=} I_{\tilde{P}} \otimes I_{\tilde{N}} \otimes \left[ I_{(\tilde{M}-1)}, 0_{(\tilde{M}-1)\times 1} \right],$$

or

$$J_1^\theta \overset{\Delta}{=} \left[ I_{\tilde{M}\tilde{N}(\tilde{P}-1)}, 0_{\tilde{M}\tilde{N}(\tilde{P}-1)\times\tilde{M}\tilde{N}} \right];$$

the fourth row selection matrix is:

$$J_2^V \triangleq I_{\tilde{P}} \otimes I_{\tilde{N}} \otimes \left[ 0_{(\tilde{M}-1)\times 1}, I_{(\tilde{M}-1)} \right],$$

or

$$J_2^\theta \triangleq \left[ 0_{\tilde{M}\tilde{N}(\tilde{P}-1)\times\tilde{M}\tilde{N}}, I_{\tilde{M}\tilde{N}(\tilde{P}-1)} \right];$$

in which, $J_1^V$ or $J_1^\theta$ represents the third row selection matrix, $J_2^V$ or $J_2^\theta$ represents the fourth row selection matrix, $\otimes$ represents a Kronecker product, $I_{\tilde{P}}$ represents an identity matrix with $\tilde{P}$ rows and $\tilde{P}$ columns, $I_{\tilde{N}}$ represents an identity matrix with $\tilde{N}$ rows and $\tilde{N}$ columns, $I_{(\tilde{M}-1)}$ represents an identity matrix with ($\tilde{M}$-1) rows and ($\tilde{M}$-1) columns, $I_{\tilde{M}\tilde{N}(\tilde{P}-1)}$ represents an identity matrix with $\tilde{M}\tilde{N}(\tilde{P}-1)$ rows and $\tilde{M}\tilde{N}(\tilde{P}-1)$ columns, $0_{\tilde{M}\tilde{N}(\tilde{P}-1)\times\tilde{M}\tilde{N}}$ represents an all-zero matrix with $\tilde{M}\tilde{N}(\tilde{P}-1)$ rows and $\tilde{M}\tilde{N}$ columns, $0_{(\tilde{M}-1)\times 1}$ represents an all-zero matrix with ($\tilde{M}$-1) rows and 1 column, $\tilde{M}$ represents a size of a smoothing window along an OFDM symbol of the OFDM signal based on a time domain dimension, $\tilde{N}$ represents a size of the smoothing window along a subcarrier based on a frequency domain dimension, $\tilde{P}$ represents a size of the smoothing window along an antenna based on a spatial domain dimension.

In an implementation, the predefined equation is:

$$\hat{T} = ((\hat{U}_1)^H \hat{U}_1)^{-1}(\hat{U}_1)^H \hat{U}_2$$

in which, $\hat{T}$ is $\hat{T}^R$, $\hat{T}^V$ or, $\hat{U}_1$ is $\mathbf{U}_1^R$, $\mathbf{U}_1^V$ or $\mathbf{U}_1^\theta$, $\hat{U}_2$ is $\mathbf{U}_2^R$, $\mathbf{U}_2^V$ or $\mathbf{U}_2^\theta$, $()^H$ represents a conjugate transpose of a matrix, $()^{-1}$ represents a transpose of a matrix.

With the parameter estimation method based on an OFDM signal provided by the embodiment of the first aspect of the present disclosure, the first reference matrix related to the first parameter of the target is determined according to the signal subspace matrix of the OFDM signal, the signal subspace matrix includes relevant information of at least one parameter, and the first parameter is determined based on the first reference eigenvalue of the first reference matrix, which can reduce the parameter acquisition cost for the target and effectively improve the parameter sensing accuracy for the target.

A second aspect of embodiments of the disclosure provides a parameter estimation apparatus based on an OFDM signal. The apparatus includes: a first determining module, configured to determine a first reference matrix related to a first parameter of a target according to a signal subspace matrix of the OFDM signal, in which the signal subspace matrix includes relevant information of at least one parameter; and a second determining module, configured to determine the first parameter based on a first reference eigenvalue of the first reference matrix.

In an implementation, the apparatus further includes: a third determining module, configured to determine a second reference matrix related to a second parameter of the target according to the signal subspace matrix; and a fourth determining module, configured to determine the second parameter according to a first eigen matrix of the first reference matrix and the second reference matrix.

In an implementation, the apparatus further includes: a fifth determining module, configured to determine a number of targets and a signal relevant matrix of the OFDM signal; a processing module, configured to obtain eigenvalues of the number of the targets and an eigenvector corresponding to each of the eigenvalues by performing eigenvalue decomposition on the signal relevant matrix; and a generating module, configured to generate the signal subspace matrix according to the eigenvectors of the number of the targets.

In an implementation, the fifth determining module is configured to: determine an intermediate parameter based on an OFDM symbol transmitted by an $n^{th}$ subcarrier in an $m^{th}$ OFDM symbol of a $p^{th}$ receiving antenna in a sensing-communication system, in which the intermediate parameter carries the relevant information of the at least one parameter, and the OFDM signal is emitted by a transmitting antenna in the sensing-communication system, $p$ is a positive integer, and $p = 0,1,...,N_R$ -1, $N_R$ is a number of receiving antennas; and determine the signal relevant matrix of the OFDM signal according to the intermediate parameter.

In an implementation, the intermediate parameter is represented by:

$$\boldsymbol{\gamma}_{\tilde{p},\tilde{m},\tilde{n}} = \left[ \boldsymbol{\beta}^T_{\tilde{p},\tilde{m},\tilde{n}}, \boldsymbol{\beta}^T_{\tilde{p}+1,\tilde{m},\tilde{n}}, \cdots, \boldsymbol{\beta}^T_{\tilde{p}+\tilde{P}-1,\tilde{m},\tilde{n}} \right]^T$$

where, $\beta_{\tilde{p},\tilde{m},\tilde{n}} = \mathrm{vec}(\mathbf{Z}_{\tilde{p},\tilde{m},\tilde{n}})$, vec $(\cdot)$ represents a vectorization operator,

$$\mathbf{Z}_{\tilde{p},\tilde{m},\tilde{n}} = \begin{bmatrix} z_{\tilde{p},\tilde{m}}(\tilde{n}) & z_{\tilde{p},\tilde{m}}(\tilde{n}+1) & \ldots & z_{\tilde{p},\tilde{m}}(\tilde{n}+\tilde{N}-1) \\ z_{\tilde{p},\tilde{m}+1}(\tilde{n}) & z_{\tilde{p},\tilde{m}+1}(\tilde{n}+1) & \ldots & z_{\tilde{p},\tilde{m}+1}(\tilde{n}+\tilde{N}-1) \\ \vdots & \vdots & \ddots & \vdots \\ z_{\tilde{p},\tilde{m}+\tilde{M}-1}(\tilde{n}) & z_{\tilde{p},\tilde{m}+\tilde{M}-1}(\tilde{n}+1) & \ldots & z_{\tilde{p},\tilde{m}+\tilde{M}-1}(\tilde{n}+\tilde{N}-1) \end{bmatrix}$$

where, $\gamma_{\tilde{p},\tilde{m},\tilde{n}}$ represents the intermediate parameter, $\tilde{m} = 0,1,..., M - \tilde{M}$, $\tilde{n} = 0,1,...,N - \tilde{N}$, $\tilde{p} = 0,1,...,N_R - \tilde{P}$, $M$ represents a size of a smoothing window along the OFDM symbol of the OFDM signal based on a time domain dimension, $\tilde{N}$ represents a size of the smoothing window along the subcarrier based on a frequency domain dimension, $\tilde{P}$ represents a size of the smoothing window along an antenna based on a spatial domain dimension.

In an implementation, the first determining module includes: a first determining sub module, configured to determine a first to-be-processed matrix and a second to-be-processed matrix related to the first parameter according to the signal subspace matrix; and a first generating sub module, configured to generate the first reference matrix according to the first to-be-processed matrix and the second to-be-processed matrix.

In an implementation, the first determining sub module is configured to: obtain the first to-be-processed matrix by multiplying a first row selection matrix and the signal subspace matrix; and obtain the second to-be-processed matrix by multiplying a second row selection matrix and the signal subspace matrix; in which, the first to-be-processed matrix does not carry information of the first parameter, and the second to-be-processed matrix carries the information of the first parameter.

In an implementation, the first generating sub module is configured to obtain the first reference matrix by processing the first to-be-processed matrix and the second to-be-processed matrix based on a predefined equation.

In an implementation, the third determining module includes: a second determining sub module, configured to determine a third to-be-processed matrix and a fourth to-be-processed matrix related to the second parameter according to the signal subspace matrix; and a second generating sub module, configured to generate the second reference matrix according to the third to-be-processed matrix and the fourth to-be-processed matrix.

In an implementation, the second determining sub module is configured to: obtain the third to-be-processed matrix by multiplying a third row selection matrix and the signal subspace matrix; and obtain the fourth to-be-processed matrix by multiplying a fourth row selection matrix and the signal subspace matrix; in which, the third to-be-processed matrix does not carry information of the second parameter, and the fourth to-be-processed matrix carries the information of the second parameter.

In an implementation, the second generating sub module is configured to: obtain the second reference matrix by processing the third to-be-processed matrix and the fourth to-be-processed matrix based on a predefined equation.

In an implementation, the first parameter is determined based on a following equation:

$$\hat{R}_i = -\frac{\mathrm{angle}(\lambda_i^R)c}{4\pi\Delta f}, i = 1, 2, \ldots, K$$

in which, $\hat{R}_i$ represents the first parameter of the target, $i$ represents an index of the target, $i$ is a positive integer less than or equal to $K$, $K$ represents a number of targets, $angle(\cdot)$ represents obtaining a phase of a complex number, $\lambda_i^R$ represents a first reference eigenvalue corresponding to the target in the first reference matrix $\hat{T}^R$, $c$ represents speed of light, and $\Delta f$ represents a subcarrier spacing of the OFDM signal.

In an implementation, the fourth determining module is configured to: determine a second reference eigenvalue of the second reference matrix according to the first eigen matrix and the second reference matrix; and determine the second parameter according to the second reference eigenvalue.

In an implementation, the second parameter is determined by a following equation:

$$\hat{v}_i = \frac{angle(\lambda_i^V)c}{4\pi f_c \overline{T}}$$

in which, $\hat{v}_i$ represents the second parameter, $\lambda_i^V$ is the second reference eigenvalue, *angle*(•) represents obtaining a phase of a complex number, *c* represents speed of light, $\overline{T}$ is a period of an OFDM symbol of the OFDM signal, and $f_c$ is a carrier frequency.

In an implementation, the second parameter is determined by a following equation:

$$\hat{\theta}_i = \arcsin\left[\frac{\lambda\, angle(\lambda_i^\theta)}{2\pi d}\right] * 180/\pi$$

in which, $\hat{\theta}_i$ represents the second parameter, $\lambda_i^\theta$ is the second reference eigenvalue, *angle*(•) represents obtaining a phase of a complex number, $\lambda$ represents a wavelength, *d* represents a spacing between different receiving antennas, and the OFDM signal is received by a receiving antenna.

In an implementation, in which

the first row selection matrix is:

$$J_1^R \overset{\Delta}{=} I_{\tilde{P}} \otimes \left[ I_{\tilde{M}(\tilde{N}-1)}, 0_{\tilde{M}(\tilde{N}-1)\times\tilde{M}} \right];$$

and

the second row selection matrix is:

$$J_2^R \overset{\Delta}{=} I_{\tilde{P}} \otimes \left[ 0_{\tilde{M}(\tilde{N}-1)\times\tilde{M}}, I_{\tilde{M}(\tilde{N}-1)} \right];$$

in which, $J_1^R$ represents the first row selection matrix, $J_2^R$ represents the second row selection matrix, $\otimes$ represents a Kronecker product, $I_{\tilde{P}}$ represents an identity matrix with $\tilde{P}$ rows and $\overline{P}$ columns, $I_{\tilde{M}(\tilde{N}-1)}$ represents an identity matrix with $\tilde{M}(\tilde{N}-1)$ rows and $\tilde{M}(\tilde{N}-1)$ columns, $0_{\tilde{M}(\tilde{N}-1)\times\tilde{M}}$ represents an all-zero matrix with $I_{\tilde{M}(\tilde{N}-1)}$ rows and $\tilde{M}$ columns, $\tilde{M}$ represents a size of a smoothing window along an OFDM symbol of the OFDM signal based on a time domain dimension, $\tilde{N}$ represents a size of the smoothing window along a subcarrier based on a frequency domain dimension, and $\tilde{P}$ represents a size of the smoothing window along an antenna based on a spatial domain dimension.

In an implementation, in which,

the third row selection matrix is:

$$J_1^V \overset{\Delta}{=} I_{\tilde{P}} \otimes I_{\tilde{N}} \otimes \left[ I_{(\tilde{M}-1)}, 0_{(\tilde{M}-1)\times 1} \right],$$

or

$$J_1^\theta \overset{\Delta}{=} \left[ I_{\tilde{M}\tilde{N}(\tilde{P}-1)}, 0_{\tilde{M}\tilde{N}(\tilde{P}-1)\times\tilde{M}\tilde{N}} \right];$$

the fourth row selection matrix is:

$$J_2^V \triangleq I_{\tilde{P}} \otimes I_{\tilde{N}} \otimes \left[ 0_{(\tilde{M}-1)\times 1}, I_{(\tilde{M}-1)} \right],$$

or

$$J_2^\theta \triangleq \left[ 0_{\tilde{M}\tilde{N}(\tilde{P}-1)\times\tilde{M}\tilde{N}}, I_{\tilde{M}\tilde{N}(\tilde{P}-1)} \right];$$

in which, $J_1^V$ or $J_1^\theta$ represents the third row selection matrix, $J_2^V$ or $J_2^\theta$ represents the fourth row selection matrix, $\otimes$ represents a Kronecker product, $I_{\tilde{P}}$ represents an identity matrix with $\tilde{P}$ rows and $\tilde{P}$ columns, $I_{\tilde{N}}$ represents an identity matrix with $\tilde{N}$ rows and $\tilde{N}$ columns, $I_{(\tilde{M}-1)}$ represents an identity matrix with $(\tilde{M}-1)$ rows and $(\tilde{M}-1)$ columns, $I_{\tilde{M}\tilde{N}(\tilde{P}-1)}$ represents an identity matrix with $\tilde{M}\tilde{N}(\tilde{P}-1)$ rows and $\tilde{M}\tilde{N}(\tilde{P}-1)$ columns, $0_{\tilde{M}\tilde{N}(\tilde{P}-1)\times\tilde{M}\tilde{N}}$ represents an all-zero matrix with $\tilde{M}\tilde{N}(\tilde{P}-1)$ rows and $\tilde{M}\tilde{N}$ columns, $0_{(\tilde{M}-1)\times 1}$ represents an all-zero matrix with $(\tilde{M}-1)$ rows and 1 column, $\tilde{M}$ represents a size of a smoothing window along an OFDM symbol of the OFDM signal based on a time domain dimension, $\tilde{N}$ represents a size of the smoothing window along a subcarrier based on a frequency domain dimension, $\tilde{P}$ represents a size of the smoothing window along an antenna based on a spatial domain dimension.

In an implementation, the predefined equation is:

$$\hat{T} = (\ (\hat{U}_1)^H \hat{U}_1)^{-1} (\hat{U}_1)^H \hat{U}_2$$

in which, $\hat{T}$ is $\hat{T}^R$, $\hat{T}^V$ or $\hat{T}^\theta$, $\hat{U}_1$ is $\mathbf{U}_1^R$, $\mathbf{U}_1^V$ or $\mathbf{U}_1^\theta$, $\hat{U}_2$ is $\mathbf{U}_2^R$, $\mathbf{U}_2^V$ or $\mathbf{U}_2^\theta$, $()^H$ represents a conjugate transpose of a matrix, $()^{-1}$ represents a transpose of a matrix.

With the parameter estimation apparatus based on an OFDM signal provided by the embodiment of the second aspect of the present disclosure, the first reference matrix related to the first parameter of the target is determined according to the signal subspace matrix of the OFDM signal, the signal subspace matrix includes relevant information of at least one parameter, and the first parameter is determined based on the first reference eigenvalue of the first reference matrix, which can reduce the parameter acquisition cost for the target and effectively improve the parameter sensing accuracy for the target.

According to a third aspect of embodiments of the disclosure, an electronic device is provided. The electronic device includes: a memory, a processor, and a computer program stored in the memory and executable on the processor. When the processor executes the computer program, the parameter estimation method based on an OFDM signal according to the first aspect of embodiments of the present disclosure is performed.

According to a fourth aspect of embodiments of the disclosure, a non-transitory computer-readable storage medium having a computer program stored thereon is provided. When the program is executed by a processor, the parameter estimation method based on an OFDM signal according to the first aspect of embodiments of the present disclosure is performed.

According to a fifth aspect of embodiments of the disclosure, a computer program product is provided. When instructions in the computer program product are executed by a processor, the parameter estimation method based on an OFDM signal according to the first aspect of embodiments of the present disclosure is performed.

Additional aspects and advantages of the disclosure will be set forth in part in the following description, which will be obvious from the description, or may be learned by practice of the disclosure.

**BRIEF DESCRIPTION OF THE DRAWINGS**

In order to more clearly illustrate the technical solutions in embodiments of the disclosure or the background technology, the accompanying drawings required to be used in the embodiments or the background technology of the disclosure will be described below.

FIG. 1 is a flow chart of a parameter estimation method based on an orthogonal frequency division multiplexing (OFDM) signal provided by an embodiment of the present disclosure;

FIG. 2 is a schematic diagram of an OFDM-based sensing-communication system provided by an embodiment of the present disclosure;

FIG. 3 is a schematic diagram of a receiving signal model of a uniform antenna array provided by an embodiment of the present disclosure;

FIG. 4 is a flow chart of a parameter estimation method based on an OFDM signal provided by an embodiment of the present disclosure;

FIG. 5 is a flow chart of a parameter estimation method based on an OFDM signal provided by an embodiment of the present disclosure;

FIG. 6 is a flow chart of a parameter estimation method based on an OFDM signal provided by an embodiment of the present disclosure;

FIG. 7 is a flow chart of a parameter estimation method based on an OFDM signal provided by an embodiment of the present disclosure;

FIG. 8 is a flow chart of a parameter estimation method based on an OFDM signal provided by an embodiment of the present disclosure;

FIG. 9 is a flow chart of a parameter estimation method based on an OFDM signal provided by an embodiment of the present disclosure;

FIG. 10 is a flow chart of a parameter estimation method based on an OFDM signal provided by an embodiment of the present disclosure;

FIG. 11 is a flow chart of a parameter estimation method based on an OFDM signal provided by an embodiment of the present disclosure;

FIG. 12 is a schematic diagram illustrating range and speed of radar detection provided by an embodiment of the present disclosure;

FIG. 13 is a schematic diagram illustrating range and a horizontal angle of radar detection provided by an embodiment of the present disclosure;

FIG. 14 is a block diagram of a parameter estimation apparatus based on an OFDM signal provided by an embodiment of the present disclosure;

FIG. 15 is a block diagram of a parameter estimation apparatus based on an OFDM signal provided by an embodiment of the present disclosure;

FIG. 16 is a block diagram of an electronic device suitable for performing embodiments of the present disclosure.

## DETAILED DESCRIPTION

Embodiments of the present disclosure are described in detail below, examples of which are illustrated in the accompanying drawings, in which the same or similar reference numerals throughout represent the same or similar elements or elements having the same or similar functions. The embodiments described below with reference to the accompanying drawings are exemplary and are only used to explain the present disclosure and are not to be construed as limitations of the present disclosure. On the contrary, the embodiments of the disclosure include all changes, modifications and equivalents falling within the spirit and scope of the appended claims.

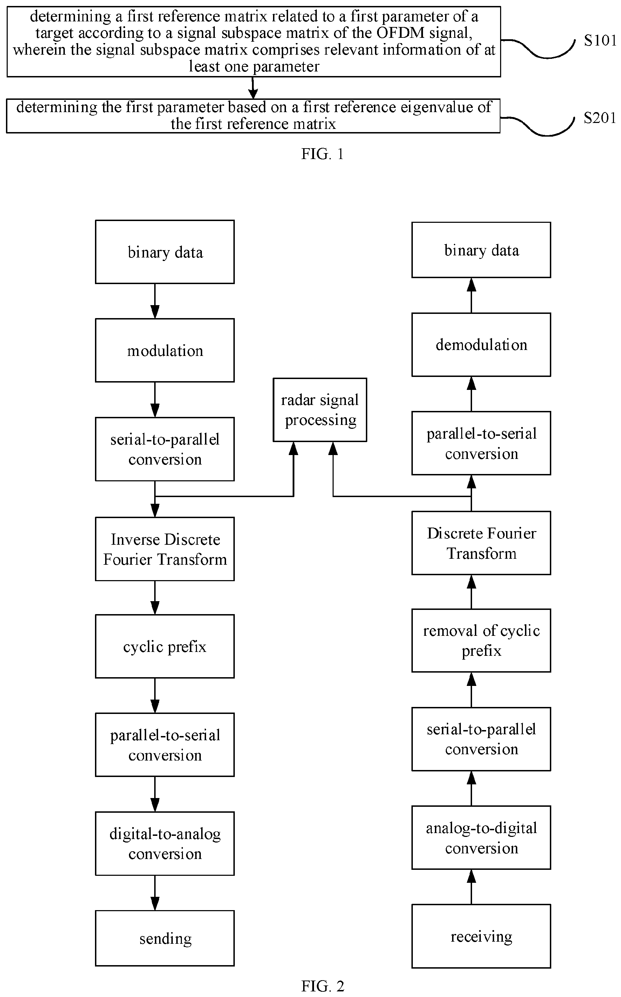

FIG. 1 is a flow chart of a parameter estimation method based on an orthogonal frequency division multiplexing (OFDM) signal provided by an embodiment of the present disclosure.

It should be noted that an execution subject of the parameter estimation method based on an OFDM signal in this embodiment is a parameter estimation apparatus based on an OFDM signal. The apparatus may be implemented in the form of software and/or hardware. The apparatus may be configured in an electronic device, which is not limited herein.

The electronic device is a device that sends data to or receives data from other devices via communication facilities. That is to say, the electronic device can be, for example, a terminal capable of network communication connection, a network device (such as a base station), etc., which is not limited herein.

As shown in FIG. 1, the parameter estimation method based on an OFDM signal includes following steps.

At S101, a first reference matrix related to a first parameter of a target is determined according to a signal subspace matrix of an OFDM signal, the signal subspace matrix includes relevant information of at least one parameter.

OFDM is a type of multi-carrier modulation. It can divide a channel into several orthogonal sub-channels, convert high-speed data signals into parallel low-speed sub-data streams, and modulate them to the respective sub-channels for transmission. The OFDM signal refers to a signal processed by OFDM.

It can be understood that, the orthogonal frequency division multiplexing has high spectrum efficiency and can effectively resist inter-symbol interference and inter-carrier interference, and it is a basic waveform of the current wireless communication standard. Therefore, a corresponding integrated sensing and communication (ISAC) system can be established based on the OFDM, also known as a sensing-communication system.

For example, as shown in FIG. 2, FIG. 2 is a schematic diagram of an OFDM-based sensing-communication system provided by an embodiment of the present disclosure, which can be divided into two parts: modulation and demodulation.

During the modulation process, an electrical signal to be transmitted, such as binary data, can be processed based on symbol modulation to convert the binary data into a modulated signal that is easy to transmit through the channel. The modulated signal can be converted from a serial signal to a parallel signal after a serial-to-parallel conversion, then it is transmitted to a radar signal processing module for processing. A duration of each symbol in the modulated signal may be increased by multiple times through Inverse Discrete Fourier Transform (IDFT), to effectively improve the anti-interference capability of the system. The modulated signal processed by IDFT can be added with a cyclic prefix (CP) to effectively reduce inter-symbol interference and inter-channel interference during signal transmission. The parallel signal is converted into a serial signal again through parallel-to-serial processing. Based on digital-to-analog conversion, the modulated signal is converted from a digital signal to an analog signal, and the obtained analog signal is sent.

During the demodulation process, the received signal is an analog signal. After analog-to-digital conversion, a digital signal corresponding to the received signal can be obtained. Serial-to-parallel conversion, removal of cyclic prefix, and discrete Fourier Transform (DFT), serial-to-parallel conversion and demodulation process are sequentially performed on the digital signal, and a corresponding binary signal can be obtained. After the DFT is performed on the received signal, it can also be sent to the radar signal processing module for processing.

For example, a period of the above OFDM symbol is $T$, a subcarrier spacing is $\Delta f = 1/T$, a cyclic prefix duration is $T_{cp}$, the complete OFDM symbol period $\overline{T} = T + T_{cp}$, the number of OFDM symbols is $M$, the number of subcarriers is $N$, and the transmitting end uses a single antenna, a transmitted signal $x(t)$ can be expressed as:

$$x(t) = \sum_{m=0}^{M-1}\sum_{n=0}^{N-1} s_m(n)e^{j2\pi n\Delta f t}\xi\left(t - m\overline{T}\right)e^{j2\pi f_c t} \quad m\overline{T} - T_{\text{cp}} \le t \le m\overline{T} + T$$

where, $s_m^{(n)}$ is an OFDM symbol transmitted by the $n^{th}$ subcarrier in the $m^{th}$ OFDM symbol, $f_c$ is a carrier frequency, and

$$\xi(t) = \begin{cases} 1, & t \in [-T_{cp}, T] \\ 0, & others \end{cases}.$$

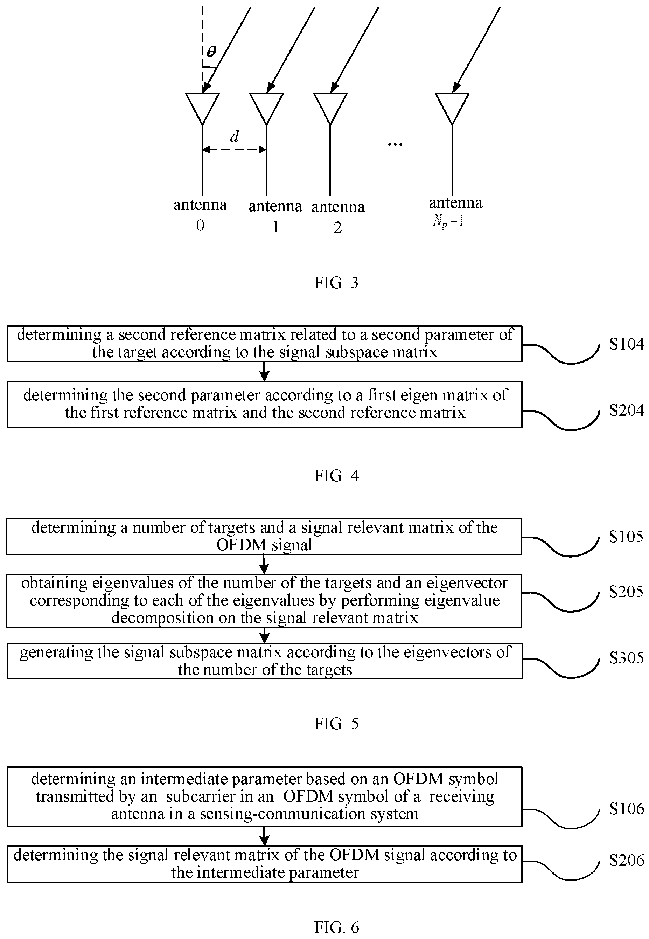

At a radar receiving end, the number of receiving antennas is $N_R$, which is a uniform antenna array, and an array element spacing is $d$. As shown in FIG.3, FIG. 3 is a schematic diagram of a receiving signal model of a uniform antenna array provided by an embodiment of the present disclosure. An emitted signal $x(t)$ is reflected by K targets whose distance, speed and horizontal angles are $R_i, v_i, \theta_i, i=1,2,...,K$ respectively, $\Phi_i \triangleq d\sin\theta_i/\lambda$, $\phi_i \triangleq 2v_i f_c\overline{T}/c$, $\varphi_i \triangleq 2R_i\Delta f/c$, where c represents speed of light, $\lambda$ represents a wavelength. After down conversion, discrete sampling, serial-to-parallel conversion, removal of cyclic prefix, and discrete Fourier transform are performed on an echo signal received by the $p^{th}$ ($p = 0,1,...,N_R$ -1) antenna, the OFDM symbol $r_{p,m}(n)$ transmitted by the $n^{th}$ subcarrier in the $m^{th}$ OFDM symbol can be expressed as:

$$r_{p,m}(n) = \sum_{i=1}^{K}\alpha_i e^{j2\pi p\Phi_i}e^{j2\pi m\phi_i}e^{-j2\pi n\varphi_i}s_m(n) + w_{p,m}(n);$$

where, $\alpha_i$ represents a received amplitude of the $i^{th}$ target reflecting an echo signal, and $w_{p,m}(n)$ is a frequency domain noise.

$$z_{p,m}(n) \triangleq \frac{r_{p,m}(n)}{s_m(n)} = \sum_{i=1}^{K}\alpha_i e^{j2\pi p\Phi_i}e^{j2\pi m\phi_i}e^{-j2\pi n\varphi_i} + \frac{w_{p,m}(n)}{s_m(n)}$$

$$= \sum_{i=1}^{K}\alpha_i e^{j2\pi p\Phi_i}e^{j2\pi m\phi_i}e^{-j2\pi n\varphi_i} + v_{p,m}(n);$$

where, $v_{p,m}(n)$ is complex Gaussian noise with a mean value as 0 and a variance as $\sigma_v^2$.

A direction vector is defined as

$$a(\phi,\varphi,\Phi) \triangleq d(\Phi) \otimes \left( g(\varphi) \otimes b(\phi) \right) \in \mathbb{C}^{\tilde{M}\tilde{N}\tilde{P}\times 1}$$

$$b(\phi) = \left[ 1, e^{j2\pi\phi}, \ldots, e^{j2\pi(\tilde{M}-1)\phi} \right]^T$$

$$g(\varphi) = \left[ 1, e^{-j2\pi\varphi}, \ldots, e^{-j2\pi(\tilde{N}-1)\varphi} \right]^T$$

$$d(\Phi) = \left[ 1, e^{j2\pi\Phi}, \ldots, e^{j2\pi(\tilde{P}-1)\Phi} \right]^T$$

where, $\otimes$ represents a Kronecker product, $(\cdot)^T$ represents a transpose, $\tilde{M} < M, \tilde{N} < N, \tilde{P} < N_R$.

The number of snapshots $N_{snap} = (M - \tilde{M} + 1)(N - \tilde{N} + 1)(N_R - \tilde{P} + 1)$.

$G = [a(\phi_1,\varphi_1,\Phi_1), a(\phi_2,\varphi_2,\Phi_2), \ldots, a(\phi_K,\varphi_K,\Phi_K)]$ is a direction matrix.

In embodiments of the present disclosure, the OFDM signal can be represented by a vector. A vector set corresponding to the OFDM signals can be called a vector space. A signal subspace can refer to a set of partial vectors in the vector space. By representing the signal subspace in the form of a matrix, the signal subspace matrix can be obtained.

The at least one parameter can be one or more of distance, speed, and a horizontal angle. The horizontal angle of the target can be interpreted as follows.

As shown in FIG. 3, a receiving direction of the receiving antenna is taken as a reference direction, if there is an imaginary line between the receiving antenna and the target, an angle between the imaginary line and the reference direction can be called the horizontal angle.

The target refers to an object for which the first parameter is to be obtained. The target can be, for example, a terminal, and a wall, the ground, a moving object in a sensing scenario in a sensing-communication system, etc., which is not limited herein.

For example, in a scenario where a base station senses a terminal, the execution subject of the embodiment of the present disclosure may be configured in the base station, and the target may refer to the terminal.

The parameter can be used to describe status information of a corresponding target. For example, the first parameter may refer to a distance between the target and the execution subject of the embodiment of the present disclosure.

The first reference matrix refers to a matrix used to obtain the first parameter.

At S201, the first parameter is determined based on the first reference eigenvalue of the first reference matrix.

In embodiments of the present disclosure, the first reference eigenvalue can be obtained by performing eigenvalue decomposition on the first reference matrix.

In this embodiment, the first reference matrix related to the first parameter of the target is determined according to the signal subspace matrix of the OFDM signal. The signal subspace matrix includes relevant information of at least one parameter. The first parameter is determined based on the first reference eigenvalue of the first reference matrix, which can reduce the parameter acquisition cost for the target and effectively improve the parameter sensing accuracy for the target.

Embodiments of the present disclosure also provide a parameter estimation method based on an OFDM signal, and the first parameter is determined based on a following equation:

$$\hat{R}_i = -\frac{\text{angle}(\lambda_i^R)c}{4\pi\Delta f}, i = 1, 2, \ldots, K ;$$

where, $\hat{R}_i$ represents the first parameter of the target, $i$ represents an index of the target, $i$ is a positive integer less than or equal to $K$, $K$ represents a number of targets, $angle(\cdot)$ represents obtaining a phase of a complex number, $\lambda_i^R$ represents a first reference eigenvalue corresponding to the target in the first reference matrix $\hat{T}^R$, $c$ represents speed of light, and $\Delta f$ represents a subcarrier spacing of the OFDM signal

In embodiments of the present disclosure, the $\hat{T}^R$ can be obtained based on $\hat{R}$, eigenvalue decomposition $\hat{T}^R$

=$\mathbf{Q}\Lambda^R\mathbf{Q}^{-1}$ can be performed on $\hat{\mathbf{T}}^R$. That is, $\mathbf{Q}$ is a matrix composed of eigenvectors of $\hat{\mathbf{T}}^R$. $\Lambda^R$ is a diagonal matrix

$$\Lambda^R = \text{diag}\left\{\lambda_1^R, \lambda_2^R, \ldots, \lambda_K^R\right\}$$

, composed of eigenvalues of $\hat{\mathbf{T}}^R$.

Then a distance estimate value of the target can be expressed as:

$$\hat{R}_i = -\frac{\text{angle}(\lambda_i^R)}{4\pi\Delta f}, i = 1, 2, \ldots, K$$

where, *angle*(•) represents the phase angle of a complex number. Since $\hat{\mathbf{T}}^R$, $\hat{\mathbf{T}}^V$, $\hat{\mathbf{T}}^\theta$ have the same eigenvectors, the eigenvalues of $\hat{\mathbf{T}}^V$ can be obtained using the matrix Q composed of the eigenvectors of $\hat{\mathbf{T}}^R$.

In this embodiment, based on the above equation for determining the first parameter, the determining process of the first parameter can be clearly and accurately indicated, and the reliability of the determining process of the first parameter can be effectively improved.

FIG. 4 is a flow chart of a parameter estimation method based on an OFDM signal proposed by another embodiment of the present disclosure.

As shown in FIG. 4, the parameter estimation method based on an OFDM signal includes the following.

At S104, a second reference matrix related to a second parameter of the target is determined according to the signal subspace matrix.

The second parameter may be, for example, the speed, a horizontal angle, etc. corresponding to the target. The second reference matrix refers to a matrix in the signal subspace matrix that can be used to determine the second parameter.

At S204, the second parameter is determined according to a first eigen matrix of the first reference matrix and the second reference matrix.

The first eigen matrix is a matrix composed of eigenvectors of the first reference matrix.

In this embodiment, by determining the second reference matrix related to the second parameter of the target according to the signal subspace matrix, and determining the second parameter according to the first eigen matrix of the first reference matrix and the second reference matrix, it is possible to accurately obtain the second parameter corresponding to the target, which can enrich the parameter estimation result, thereby effectively improving the practicality of the parameter estimation method based on an OFDM signal.

FIG. 5 is a flow chart of a parameter estimation method based on an OFDM signal proposed by another embodiment of the present disclosure.

As shown in FIG. 5, the parameter estimation method based on an OFDM signal includes the following.

At S105, the number of targets and the signal relevant matrix of the OFDM signal are determined.

The number of targets refers to the number of targets for parameter estimation in an application scenario.

For example, in embodiments of the present disclosure, when estimating the number of targets, it may be based on the Akaike Information Criterion (AIC). If a sample relevant matrix is obtained using observed signal samples, the number of the observed signal samples is $N_{\text{snap}}$, $\tilde{M}\tilde{N}\tilde{P}$ eigenvalues of $\hat{\mathbf{R}}$ are arranged in a descending order, that is, $\lambda_1 \geq \lambda_2 \geq \ldots \geq \lambda_K \geq \lambda_{K+1} \geq \ldots \geq \lambda_{\tilde{M}\tilde{N}\tilde{P}}$. It is defined:

$$\text{AIC}(l) = -2\ln\left[\left(\prod_{i=l+1}^{\tilde{M}\tilde{N}\tilde{P}} \lambda_i^{\frac{1}{\tilde{M}\tilde{N}\tilde{P}-l}}\right)\Bigg/\left(\frac{1}{\tilde{M}\tilde{N}\tilde{P}-l}\sum_{i=l+1}^{\tilde{M}\tilde{N}\tilde{P}} \lambda_i\right)\right]^{(\tilde{M}\tilde{N}\tilde{P}-l)N_{\text{snap}}} + 2l(2\tilde{M}\tilde{N}\tilde{P}-l)$$

When *l* increases from 0 to $\tilde{M}\tilde{N}\tilde{P}$-1, $\hat{K}$ that can minimize AIC(l) is found. At this time, $\hat{K}$ is the estimated number of targets, that is, $\hat{K} = \min\{\text{AIC}(l), l = 0,1,\ldots,\tilde{M}\tilde{N}\tilde{P}\text{-}1\}$.

For example, when estimating the number of targets in embodiments of the present disclosure, the number of targets can be estimated based on a Minimum Description Length (MDL) algorithm by seeking a minimum value point of an objective function. The function of this algorithm is:

$$MDL(l) = -\ln\left[\left(\prod_{i=l+1}^{\tilde{M}\tilde{N}\tilde{P}} \lambda_i^{\frac{1}{\tilde{M}\tilde{N}\tilde{P}-l}}\right) \middle/ \left(\frac{1}{\tilde{M}\tilde{N}\tilde{P}-l}\sum_{i=l+1}^{\tilde{M}\tilde{N}\tilde{P}} \lambda_i\right)\right]^{(\tilde{M}\tilde{N}\tilde{P}-l)N_{\text{snap}}}$$

$$+\frac{l}{2}(2\tilde{M}\tilde{N}\tilde{P}-l)\ln N_{\text{snap}}$$

Similarly, when MDL($l$) has the minimum value, the corresponding $\hat{K}$ is the estimated number of targets.

In addition, for the scenario where the base station senses the terminal, if the terminal has initiated the random access, the base station can directly obtain the number of terminals.

The signal relevant matrix refers to a matrix obtained by analyzing and processing the OFDM signal based on the application scenario.

In embodiments of the present disclosure, by determining the number of targets and the signal relevant matrix of the OFDM signal, reliable reference data can be provided for subsequently obtaining eigenvalues and eigenvectors.

At S205, eigenvalues of the number of the targets and an eigenvector corresponding to each eigenvalue are obtained by performing eigenvalue decomposition on the signal relevant matrix.

For example, A is an n-order matrix. If an equation $A\alpha = \lambda\alpha$ holds, $\alpha$ is an eigenvector of A corresponding to $\lambda$, and $\lambda$ is an eigenvalue of A.

The eigenvalue decomposition of the relevant matrix **R** can be expressed as:

$$\mathbf{R} = \mathbf{U}\Lambda\mathbf{U}^H$$

$$= \begin{bmatrix} \mathbf{U}_s & \mathbf{U}_n \end{bmatrix} \begin{bmatrix} \Lambda_s & \mathbf{0}_{K\times(\tilde{M}\tilde{N}\tilde{P}-K)} \\ \mathbf{0}_{(\tilde{M}\tilde{N}\tilde{P}-K)\times K} & \sigma_v^2\mathbf{I}_{\tilde{M}\tilde{N}\tilde{P}} \end{bmatrix} \begin{bmatrix} \mathbf{U}_s^H \\ \mathbf{U}_n^H \end{bmatrix};$$

$$= \mathbf{U}_s\Lambda_s\mathbf{U}_s^H + \sigma_v^2\mathbf{U}_n\mathbf{U}_n^H$$

where, $\mathbf{I}_u$ represents an identity matrix with $u$ rows and $u$ columns, $\mathbf{0}_{u\times v}$ represents an all-0 matrix with $u$ rows and v columns, U is a $\tilde{M}\tilde{N}\tilde{P} \times \tilde{M}\tilde{N}\tilde{P}$ unitary matrix, $\Lambda$ is a $\tilde{M}\tilde{N}\tilde{P} \times \tilde{M}\tilde{N}\tilde{P}$ diagonal matrix, and elements in the diagonal are the eigenvalues of the matrix **R**, $\Lambda_s$ is a $K\times K$ diagonal matrix, elements in the diagonal are $K$ large eigenvalues of the matrix **R**, $\mathbf{U}_s$ is a $\tilde{M}\tilde{N}\tilde{P} \times K$ matrix, representing the signal subspace, $\mathbf{U}_n$ is a $\tilde{M}\tilde{N}\tilde{P}\times(\tilde{M}\tilde{N}\tilde{P}-K)$ matrix, representing a noise subspace.

It can be understood that the eigenvalues and eigenvectors can effectively characterize the geometric characteristics of the corresponding matrix, and can provide reliable reference information for generating the signal subspace matrix.

At S305, the signal subspace matrix is generated according to the eigenvectors of the number of the targets.

For example, $\mathbf{U}_n\mathbf{U}_n^H = \mathbf{I}_{\tilde{M}\tilde{N}\tilde{P}} - \mathbf{U}_s\mathbf{U}_s^H$, the signal subspace matrix $\mathbf{U}_s$ can be expressed as:

$$\mathbf{U}_s = \mathbf{G}\Gamma\mathbf{G}^H\mathbf{U}_s\left(\Lambda_s - \sigma_v^2\mathbf{I}_K\right)^{-1}$$

$$= \mathbf{G}\mathbf{H}$$

where, $\mathbf{H} = \Gamma\mathbf{G}^H\mathbf{U}_s\left(\Lambda_s - \sigma_v^2\mathbf{I}_K\right)^{-1} \in \mathbb{C}^{K\times K}$, **H** is an invertible matrix.

In this embodiment, by determining the number of the targets and the signal relevant matrix of the OFDM signal, performing the eigenvalue decomposition on the signal relevant matrix to obtain the eigenvalues of the number of targets and the eigenvector corresponding to each eigenvalue. The signal subspace matrix is generated according to the eigenvector of the number of the targets, which can effectively combine the relevant information of the target and the OFDM signal in the process of generating the signal subspace matrix, thus effectively improving the adaptability between the obtained signal subspace matrix and personalized application scenarios.

FIG. 6 is a flow chart of a parameter estimation method based on an OFDM signal proposed by another embodiment of the present disclosure.

As shown in FIG. 6, the parameter estimation method based on an OFDM signal includes the following.

At S106, an intermediate parameter is determined based on an OFDM symbol transmitted by an $n^{th}$ subcarrier in an $m^{th}$ OFDM symbol of a $p^{th}$ receiving antenna in a sensing-communication system, the intermediate parameter carries the relevant information of the at least one parameter, and the OFDM signal is emitted by a transmitting antenna in the sensing-communication system, $p$ is a positive integer, and $p = 0,1,...,N_R$ -1, $N_R$ is a number of receiving antennas.

An OFDM symbol refers to a frequency domain sequence of the OFDM signal, which can be composed of points containing different components and the energy contained in the frequency point.

The intermediate parameter may be a parameter defined in the process of determining the signal relevant matrix correspondence.

At S206, the signal relevant matrix of the OFDM signal is determined according to the intermediate parameter.

The transmitting antenna refers to an antenna configured in the sensing-communication system for emitting signals. An antenna used to receive signals can be called a receiving antenna.

In embodiments of the present disclosure, there is no limit on the number of transmitting antennas and receiving antennas.

Based on the OFDM technology, a wide frequency carrier is divided into multiple carriers with smaller bandwidths, which can be called subcarriers. It can be understood that subcarriers are orthogonal to each other, and the bandwidth of each subcarrier is smaller than the channel bandwidth. Therefore, the OFDM can effectively overcome frequency selective fading and use multiple carriers for signal transmission at the same time.

For example, an equation for obtaining the signal relevant matrix **R** can be:

$$\mathbf{R} = \mathrm{E}\left\{ \boldsymbol{\gamma}_{\tilde{p},\tilde{m},\tilde{n}} \boldsymbol{\gamma}_{\tilde{p},\tilde{m},\tilde{n}}^{H} \right\} = \mathbf{G}\boldsymbol{\Gamma}\mathbf{G}^{H} + \sigma_{v}^{2}\mathbf{I}_{\tilde{M}\tilde{N}\tilde{P}} \; ;$$

where, $\mathbf{I}_{\tilde{M}\tilde{N}\tilde{P}} \in \mathbb{C}^{\tilde{M}\tilde{N}\tilde{P} \times \tilde{M}\tilde{N}\tilde{P}}$ is an identity matrix, $\boldsymbol{\Gamma} = \mathrm{E}\left\{ \boldsymbol{c}_{\tilde{p},\tilde{m},\tilde{n}} \boldsymbol{c}_{\tilde{p},\tilde{m},\tilde{n}}^{H} \right\}$.

In this embodiment, the intermediate parameter is determined based on the OFDM symbol transmitted by the $n^{th}$ subcarrier in the $m^{th}$ OFDM symbol of a $p^{th}$ receiving antenna in the sensing-communication system, the intermediate parameter carries the relevant information of the at least one parameter, and the OFDM signal is emitted by the transmitting antenna in the sensing-communication system, $p$ is a positive integer, and $p = 0,1,...,N_R$ - 1, $N_R$ is the number of receiving antennas. According to the intermediate parameter, the signal relevant matrix of the OFDM signal is determined. The intermediate parameter carries the relevant information of at least one parameter, thus, when the signal relevant matrix is determined based on the intermediate parameter, the effect of the signal relevant matrix for indicating the parameter-related information can be effectively improved.

Embodiments of the present disclosure also provide a parameter estimation method based on an OFDM signal. The intermediate parameter is represented by the following equation:

$$\boldsymbol{\gamma}_{\tilde{p},\tilde{m},\tilde{n}} = \left[ \boldsymbol{\beta}_{\tilde{p},\tilde{m},\tilde{n}}^{T}, \boldsymbol{\beta}_{\tilde{p}+1,\tilde{m},\tilde{n}}^{T}, \cdots, \boldsymbol{\beta}_{\tilde{p}+\tilde{P}-1,\tilde{m},\tilde{n}}^{T} \right]^{T}$$

where, $\beta_{\tilde{p},\tilde{m},\tilde{n}} = \mathrm{vec}(\mathbf{Z}_{\tilde{p},\tilde{m},\tilde{n}})$, vec ($\cdot$) represents a vectorization operator,

$$\mathbf{Z}_{\tilde{p},\tilde{m},\tilde{n}} = \begin{bmatrix} z_{\tilde{p},\tilde{m}}(\tilde{n}) & z_{\tilde{p},\tilde{m}}(\tilde{n}+1) & \dots & z_{\tilde{p},\tilde{m}}(\tilde{n}+\tilde{N}-1) \\ z_{\tilde{p},\tilde{m}+1}(\tilde{n}) & z_{\tilde{p},\tilde{m}+1}(\tilde{n}+1) & \dots & z_{\tilde{p},\tilde{m}+1}(\tilde{n}+\tilde{N}-1) \\ \vdots & \vdots & \ddots & \vdots \\ z_{\tilde{p},\tilde{m}+\tilde{M}-1}(\tilde{n}) & z_{\tilde{p},\tilde{m}+\tilde{M}-1}(\tilde{n}+1) & \dots & z_{\tilde{p},\tilde{m}+\tilde{M}-1}(\tilde{n}+\tilde{N}-1) \end{bmatrix}$$

where, $\gamma_{\tilde{p},\tilde{m},\tilde{n}}$ represents the intermediate parameter, $\tilde{m} = 0,1,..., M - \tilde{M}, \tilde{n} = 0,1,...,N - \tilde{N}, \tilde{p}=0,1,...,N_R - \tilde{P}, \tilde{M}$ represents a size of a smoothing window along the OFDM symbol of the OFDM signal based on a time domain dimension, $\tilde{N}$ represents a size of the smoothing window along the subcarrier based on a frequency domain dimension, $\tilde{P}$ represents a size of the smoothing window along the antenna based on a spatial domain dimension, which can provide a clear and reliable implementation basis for determining the intermediate parameter, and can effectively improve the accuracy of the obtained intermediate parameter.

The smoothing window refers to smoothing the OFDM signal based on a window function.

The time domain can also be called a temporal domain. In the time domain, the independent variable is time, that is, the horizontal axis is time, and the vertical axis is the change of the signal. A dynamic signal $x(t)$ is a function that describes values of the signal at different time points t.

The frequency domain can also be called the frequency-domain. The independent variable is frequency, that is, the horizontal axis is frequency, and the vertical axis is an amplitude of a frequency signal, which can also be represented as a spectrogram. A spectrogram describes a frequency structure of a signal and a relationship between frequency and an amplitude of the frequency signal.

The spatial domain can use spatial coordinates as variables, the spatial domain dimension is measured by "layer", and is implemented using multi-antenna transmission and multi-antenna reception technology. Each layer corresponds to a valid data stream and is mapped to a logical "Antenna Port". Each antenna port corresponds to one time-frequency resource grid and has a corresponding reference signal, to facilitate the receiving end to perform channel estimation and coherent demodulation.

It can be understood that any waveform can be decomposed into a sum of multiple sine waves. Each sine wave has its own frequency and amplitude. Therefore, any waveform signal has its own set of frequencies and amplitudes. Therefore, the frequency domain can be signals obtained by performing a Fourier transform on signal in the spatial domain.

For example,

$$c_{\tilde{p},\tilde{m},\tilde{n}} = \left[ \alpha_1 e^{j2\pi(\tilde{m}\phi_1 - \tilde{n}\varphi_1 + \tilde{p}\varPhi_1)}, \alpha_2 e^{j2\pi(\tilde{m}\phi_2 - \tilde{n}\varphi_2 + \tilde{p}\varPhi_2)}, \ldots, \alpha_K e^{j2\pi(\tilde{m}\phi_K - \tilde{n}\varphi_K + \tilde{p}\varPhi_K)} \right]^T,$$

, the vector $\gamma_{\tilde{p},\tilde{m},\tilde{n}}$ may be expressed as:

$$\gamma_{\tilde{p},\tilde{m},\tilde{n}} = \left[ a(\phi_1,\varphi_1,\varPhi_1), a(\phi_2,\varphi_2,\varPhi_2), \ldots, a(\phi_K,\varphi_K,\varPhi_K) \right] \begin{bmatrix} \alpha_1 e^{j2\pi(\tilde{m}\phi_1 - \tilde{n}\varphi_1 + \tilde{p}\varPhi_1)} \\ \alpha_2 e^{j2\pi(\tilde{m}\phi_2 - \tilde{n}\varphi_2 + \tilde{p}\varPhi_2)} \\ \vdots \\ \alpha_K e^{j2\pi(\tilde{m}\phi_K - \tilde{n}\varphi_K + \tilde{p}\varPhi_K)} \end{bmatrix} + v_{\tilde{p},\tilde{m},\tilde{n}}$$

$$= \mathbf{G} c_{\tilde{p},\tilde{m},\tilde{n}} + v_{\tilde{p},\tilde{m},\tilde{n}}$$

$$v_{\tilde{p},\tilde{m},\tilde{n}} = \left[ \varepsilon_{\tilde{p},\tilde{m},\tilde{n}}^T, \varepsilon_{\tilde{p}+1,\tilde{m},\tilde{n}}^T, \ldots, \varepsilon_{\tilde{p}+\tilde{P}-1,m,n}^T \right]^T$$

where, a noise vector $\qquad\qquad$ , $\varepsilon_{\tilde{p},\tilde{m},\tilde{n}} = \mathrm{vec}(V_{\tilde{p},\tilde{m},\tilde{n}})$,

$$\mathbf{V}_{\tilde{p},\tilde{m},\tilde{n}} = \begin{bmatrix} v_{\tilde{p},\tilde{m}}(\tilde{n}) & v_{\tilde{p},\tilde{m}}(\tilde{n}+1) & \cdots & v_{\tilde{p},\tilde{m}}(\tilde{n}+\tilde{N}-1) \\ v_{\tilde{p},\tilde{m}+1}(\tilde{n}) & v_{\tilde{p},\tilde{m}+1}(\tilde{n}+1) & \cdots & v_{\tilde{p},\tilde{m}+1}(\tilde{n}+\tilde{N}-1) \\ \vdots & \vdots & \ddots & \vdots \\ v_{\tilde{p},\tilde{m}+\tilde{M}-1}(\tilde{n}) & v_{\tilde{p},\tilde{m}+\tilde{M}-1}(\tilde{n}+1) & \cdots & v_{\tilde{p},\tilde{m}+\tilde{M}-1}(\tilde{n}+\tilde{N}-1) \end{bmatrix}.$$

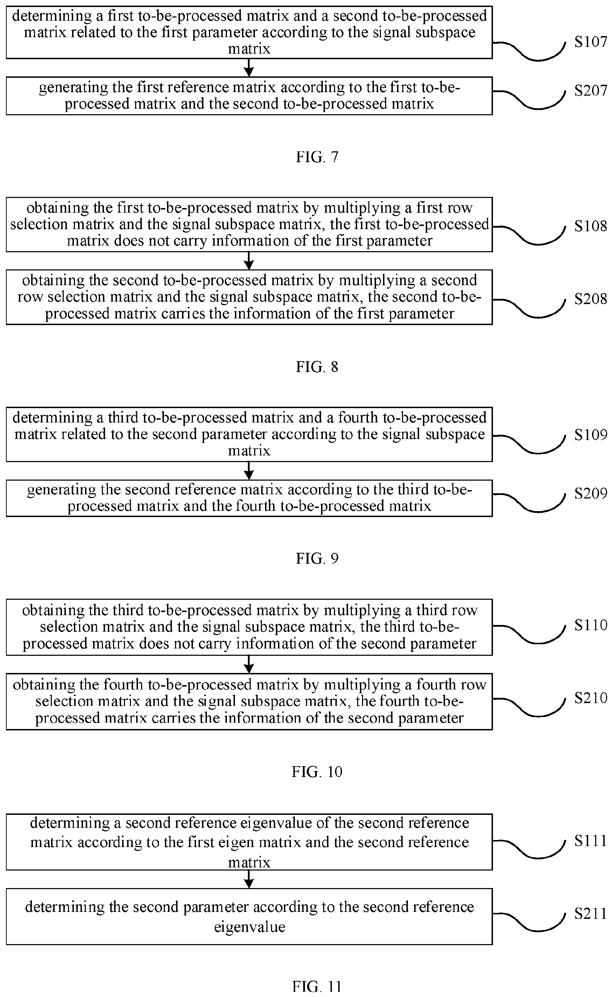

FIG. 7 is a flow chart of a parameter estimation method based on an OFDM signal proposed by another embodiment of the present disclosure.

As shown in FIG. 7, the parameter estimation method based on an OFDM signal includes the following.

At S107, a first to-be-processed matrix and a second to-be-processed matrix related to the first parameter are determined according to the signal subspace matrix.

The first to-be-processed matrix and the second to-be-processed matrix may be two to-be-processed matrices obtained based on the signal subspace matrix, and may be used to obtain the first reference matrix.

At S207, the first reference matrix is generated based on the first to-be-processed matrix and the second to-be-processed matrix.

In this embodiment, by determining the first to-be-processed matrix and the second to-be-processed matrix related to the first parameter according to the signal subspace matrix, the first reference matrix is generated based on the first to-be-processed matrix and the second to-be-processed matrix. The first to-be-processed matrix and the second to-be-processed matrix related to the first parameter can be obtained based on the signal subspace matrix, which can reduce redundant information in the process of generating the first reference matrix, thereby effectively improving the acquisition efficiency of the first parameter matrix..

Embodiments of the present disclosure also provide a parameter estimation method based on an OFDM signal. When generating the first reference matrix based on the first to-be-processed matrix and the second to-be-processed matrix, it may be based on a predefined equation to process the first to-be-processed matrix and the second to-be-processed matrix to obtain the first reference matrix, which can clearly and accurately indicate the processing process of the first to-be-processed matrix and the second to-be-processed matrix based on the predefined equation.

The predefined equation may be an equation configured in advance for the first to-be-processed matrix and the second to-be-processed matrix.

FIG. 8 is a flow chart of a parameter estimation method based on an OFDM signal proposed by another embodiment of the present disclosure.

As shown in FIG. 8, the parameter estimation method based on an OFDM signal includes the following.

At S108, the first to-be-processed matrix is obtained by multiplying a first row selection matrix and the signal subspace matrix, the first to-be-processed matrix does not carry information of the first parameter.

It can be understood that the signal subspace matrix may contain a lot of redundant information in an application scenario of obtaining the first parameter. Therefore, a row selection matrix can be predefined for obtaining partial rows in the signal subspace matrix by multiplying the signal subspace matrix and the row selection matrix, to obtain the to-be-processed matrix.

At S208, the second to-be-processed matrix is obtained by multiplying a second row selection matrix and the signal subspace matrix, where the second to-be-processed matrix carries the information of the first parameter.

In this embodiment, the first to-be-processed matrix is obtained by multiplying the first row selection matrix and the signal subspace matrix, and the second to-be-processed matrix is obtained by multiplying the second row selection matrix and the signal subspace matrix, the first to-be-processed matrix does not carry the information of the first parameter, and the second to-be-processed matrix carries the information of the first parameter. Therefore, the acquisition process of the first to-be-processed matrix and the second to-be-processed matrix can be accurately indicated, ensuring the reliability of the obtained first to-be-processed matrix and second to-be-processed matrix.

Embodiments of the present disclosure also provide a parameter estimation method based on an OFDM signal, in which,

the first row selection matrix is:

$$J_1^R \overset{\Delta}{=} I_{\tilde{P}} \otimes \left[ I_{\tilde{M}(\tilde{N}-1)}, 0_{\tilde{M}(\tilde{N}-1)\times \tilde{M}} \right];$$

and

the second row selection matrix is:

$$J_2^R \triangleq I_{\tilde{P}} \otimes \left[ 0_{\tilde{M}(\tilde{N}-1)\times \tilde{M}}, I_{\tilde{M}(\tilde{N}-1)} \right].$$

Where, $J_1^R$ represents the first row selection matrix, $J_2^R$ represents the second row selection matrix, $\otimes$ represents a Kronecker product, $I_{\tilde{P}}$ represents an identity matrix with $\tilde{P}$ rows and $\tilde{P}$ columns, $I_{\tilde{M}(\tilde{N}-1)}$ represents an identity matrix with $\tilde{M}(\tilde{N}-1)$ rows and $\tilde{M}(\tilde{N}-1)$ columns, $0_{\tilde{M}(\tilde{N}-1)\times \tilde{M}}$ represents an all-zero matrix with $\tilde{M}(\tilde{N}-1)$ rows and $\tilde{M}$ columns, $\tilde{M}$ represents a size of a smoothing window along an OFDM symbol of the OFDM signal based on a time domain dimension, $\tilde{N}$ represents a size of the smoothing window along a subcarrier based on a frequency domain dimension, and $\tilde{P}$ represents a size of the smoothing window along an antenna based on a spatial domain dimension.

For example, in embodiments of the disclosure, after obtaining the first row selection matrix $J_1^R$, and the second row selection matrix $J_2^R$, a calculation equation of the first to-be-processed matrix can be expressed as:

$$U_1^R \triangleq J_1^R U_S = J_1^R GH \; ;$$

A calculation equation of the second to-be-processed matrix can be expressed as:

$$U_2^R \triangleq J_2^R U_S = J_2^R GH = J_1^R GD^R H$$

where, $\mathbf{D}^R = \mathrm{diag}\{e^{-j2\pi\varphi 1}, e^{-j2\pi\varphi 2}, \ldots, e^{-j2\pi\varphi K}\}$, diag{•} represents a diagonal matrix symbol. $\mathbf{H}$ is an invertible matrix, then $\mathbf{U}_2^R = \mathbf{U}_1^R \mathbf{H}^{-1} \mathbf{D}^R \mathbf{H}$.

FIG. 9 is a flow chart of a parameter estimation method based on an OFDM signal proposed by another embodiment of the present disclosure.

As shown in FIG. 9, the parameter estimation method based on an OFDM signal includes the following.

At S109, a third to-be-processed matrix and a fourth to-be-processed matrix related to the second parameter are determined according to the signal subspace matrix.

The third to-be-processed matrix and the fourth to-be-processed matrix refer to the to-be-processed matrices obtained based on the signal subspace matrix and used to generate the second reference matrix.

At S209, a second reference matrix is generated based on the third to-be-processed matrix and the fourth to-be-processed matrix.

In this embodiment, by determining the third to-be-processed matrix and the fourth to-be-processed matrix related to the second parameter according to the signal subspace matrix, the second reference matrix is generated based on the third to-be-processed matrix and the fourth to-be-processed matrix. Thus, the third to-be-processed matrix and the fourth to-be-processed matrix that are highly correlated with the second parameter can be obtained based on the signal subspace matrix, thereby effectively improving the effect of the obtained second parameter matrix for indicating the second parameter.

Embodiments of the present disclosure also provide a parameter estimation method based on an OFDM signal. When generating the second reference matrix based on the third to-be-processed matrix and the fourth to-be-processed matrix, it may be based on a predefined equation to process the third to-be-processed matrix and the fourth to-be-processed matrix, to obtain the second reference matrix. The predefined equation can clearly and accurately indicate the processing process of the third to-be-processed matrix and the fourth to-be-processed matrix, ensuring the reliability of the obtained second reference matrix..

It can be understood that, $\mathbf{U}_1^R$, $\mathbf{U}_1^V$ and $\mathbf{U}_1^\theta$ are matrices with full column rank. Therefore, embodiments of the present disclosure also provide a parameter estimation method based on an OFDM signal, in which the predefined equation is:

$$\hat{T} = (\ (\hat{U}_1)^H \hat{U}_1\ )^{-1} (\hat{U}_1)^H \hat{U}_2$$

where, $T$ is $\hat{T}^R$, $\hat{T}^V$ or $\hat{T}^\theta$, $\hat{U}_1$ is $\mathbf{U}_1^R$, $\mathbf{U}_1^V$ or $\mathbf{U}_1^\theta$, $\hat{U}_2$ is $\mathbf{U}_2^R$, $\mathbf{U}_2^V$ or $\mathbf{U}_2^\theta$, ()$^H$ represents a conjugate transpose of a matrix, ()$^{-1}$ represents a transpose of a matrix.

In embodiments of the present disclosure, the obtained $\hat{T}^R$, $\hat{T}^V$ and $\hat{T}^\theta$ respectively reflect the rotation invariance of $\mathbf{U}_1^R$ and $\mathbf{U}_2^R$, $\mathbf{U}_1^V$ and $\mathbf{U}_2^V$, $\mathbf{U}_1^\theta$ and $\mathbf{U}_2^\theta$. After obtaining the rotation invariance relation matrices $\hat{T}^R$, $\hat{T}^V$ and $\hat{T}^\theta$, the eigenvalue decomposition can be performed respectively on them, to obtain the distance, speed, horizontal angle and other parameters of the target.

In this embodiment, by indicating the predefined equation, a reliable execution basis can be provided for the processing of the to-be-processed matrices, and the processing effect of the to-be-processed matrices can be effectively improved.

FIG. 10 is a flow chart of a parameter estimation method based on an OFDM signal proposed by another embodiment of the present disclosure.

As shown in FIG. 10, the parameter estimation method based on an OFDM signal includes the following.

At S110, the third to-be-processed matrix is obtained by multiplying a third row selection matrix and the signal subspace matrix, the third to-be-processed matrix does not carry information of the second parameter.

At S210, the fourth to-be-processed matrix is obtained by multiplying a fourth row selection matrix and the signal subspace matrix, the fourth to-be-processed matrix carries the information of the second parameter.

In this embodiment, the third to-be-processed matrix is obtained by multiplying the third row selection matrix and the signal subspace matrix, and the fourth to-be-processed matrix is obtained by multiplying the fourth row selection matrix and the signal subspace matrix. The third to-be-processed matrix does not carry the information of the second parameter, and the fourth to-be-processed matrix carries the information of the second parameter, which can provide a reliable execution basis for the acquisition process of the third to-be-processed matrix and the fourth to-be-processed matrix.

Embodiments of the present disclosure also provide a parameter estimation method based on an OFDM signal, in which,

the third row of selection matrix is:

$$J_1^V \triangleq I_{\tilde{P}} \otimes I_{\tilde{N}} \otimes \left[ I_{(\tilde{M}-1)} , 0_{(\tilde{M}-1)\times 1} \right],$$

or

$$J_1^\theta \triangleq \left[ I_{\tilde{M}\tilde{N}(\tilde{P}-1)} , 0_{\tilde{M}\tilde{N}(\tilde{P}-1)\times\tilde{M}\tilde{N}} \right];$$

the fourth row of selection matrix is:

$$J_2^V \triangleq I_{\tilde{P}} \otimes I_{\tilde{N}} \otimes \left[ 0_{(\tilde{M}-1)\times 1} , I_{(\tilde{M}-1)} \right],$$

or

$$J_2^\theta \triangleq \left[ 0_{\tilde{M}\tilde{N}(\tilde{P}-1)\times\tilde{M}\tilde{N}} , I_{\tilde{M}\tilde{N}(\tilde{P}-1)} \right];$$

where, $J_1^V$ or $J_1^\theta$ represents the third row selection matrix, $J_2^V$ or $J_2^\theta$ represents the fourth row selection matrix, $\otimes$ represents a Kronecker product, $I_{\tilde{P}}$ represents an identity matrix with $\tilde{P}$ rows and $\tilde{P}$ columns, $I_{\tilde{N}}$ represents an identity matrix with $\tilde{N}$ rows and $\tilde{N}$ columns, $I_{(\tilde{M}-1)}$ represents an identity matrix with $(\tilde{M}-1)$ rows and $(\tilde{M}-1)$ columns, $I_{\tilde{M}\tilde{N}(\tilde{P}-1)}$ represents an identity matrix with $\tilde{M}\tilde{N}(\tilde{P}-1)$ rows and $\tilde{M}\tilde{N}(\tilde{P}-1)$ columns, $0_{\tilde{M}\tilde{N}(\tilde{P}-1)\times\tilde{M}\tilde{N}}$ represents an all-zero matrix with $\tilde{M}\tilde{N}(\tilde{P}-1)$ rows and $\tilde{M}\tilde{N}$ columns, $0_{(\tilde{M}-1)\times 1}$ represents an all-zero matrix with $(\tilde{M}-1)$ rows and 1 column, $\tilde{M}$ represents a size of a smoothing window along an OFDM symbol of the OFDM signal based on a time domain dimension, $\tilde{N}$ represents a size of the smoothing window along a subcarrier based on a frequency domain dimension, $\tilde{P}$ represents a size of the smoothing window along an antenna based on a spatial domain dimension.

For example, in embodiments of the present disclosure, when the second parameter is the speed $v_i$, the third to-be-processed matrix can be obtained based on the third row selection matrix $J_1^V$ :

$$U_1^V \triangleq J_1^V U_S = J_1^V GH .$$

The fourth to-be-processed matrix is obtained based on the fourth row selection matrix $J_2^V$ :

$$U_2^V \triangleq J_2^V U_S = J_2^V GH = J_1^V GD^V H \; .$$

When the second parameter is the horizontal angle $\hat{\theta}_i$, the third to-be-processed matrix can be obtained based on the third row selection matrix $J_1^\theta$ :

$$U_1^\theta \triangleq J_1^\theta U_S = J_1^\theta GH \; .$$

The fourth to-be-processed matrix is obtained based on the fourth row selection matrix $J_2^\theta$ :

$$U_2^\theta \triangleq J_2^\theta U_S = J_2^\theta GH = J_1^\theta GD^\theta H \; .$$

Where, $\mathbf{D}^V = \mathrm{diag}\{e^{j2\pi\phi_1}, e^{j2\pi\phi_2}, ..., e^{j2\pi\phi_K}\}$, $\mathbf{D}^\theta = \mathrm{diag}\{e^{j2\pi\Phi_1}, e^{j2\pi\Phi_2}, ..., e^{j2\pi\Phi_K}\}$, diag{•} represents a diagonal matrix symbol. $\mathbf{H}$ is an invertible matrix, thus, $\mathbf{U}_2^V = \mathbf{U}_1^V \mathbf{H}^{-1} \mathbf{D}^V \mathbf{H}$ , $\mathbf{U}_2^\theta = \mathbf{U}_1^\theta \mathbf{H}^{-1} \mathbf{D}^\theta \mathbf{H}$ .

In this embodiment, by indicating the equations for obtaining the third row selection matrix and the fourth row selection matrix, the acquisition process of the third row selection matrix and the fourth row selection matrix can be clearly and accurately indicated, thus effectively improving the reliability in the parameter estimation process.

FIG. 11 is a flowchart of a parameter estimation method based on an OFDM signal proposed by another embodiment of the present disclosure.

As shown in FIG. 11, the parameter estimation method based on an OFDM signal includes the following.

At S111, a second reference eigenvalue of the second reference matrix is determined according to the first eigen matrix and the second reference matrix.

At S211, the second parameter is determined according to the second reference eigenvalue.

In this embodiment, by determining the second reference eigenvalue of the second reference matrix according to the first eigen matrix and the second reference matrix, the second parameter is determined based on the second reference eigenvalue. Since the first reference matrix and the second reference matrix have the same eigenvectors. When determining the second reference eigenvalue of the second reference matrix based on the first eigen matrix and the second reference matrix, the time delay caused by obtaining the eigen matrix corresponding to the second reference matrix can be avoided, thereby effectively improving the accuracy and acquisition efficiency of obtained the second parameter.

It can be understood that in embodiments of the present disclosure, the first reference matrix and the second reference matrix have the same feature vector, therefore, the first eigen matrix corresponding to the first reference matrix and the second reference matrix can be used to determine the second reference eigenvalue of the second reference matrix.

An equation for calculating the diagonal matrix $\Lambda^V$ can be expressed as:

$$\mathrm{diag}\left\{\mathbf{Q}^{-1}\hat{\mathbf{T}}^V\mathbf{Q}\right\} = \mathbf{\Lambda}^V \; ;$$

where, $\mathbf{\Lambda}^V = \mathrm{diag}\left\{\lambda_1^V, \lambda_2^V, ..., \lambda_K^V\right\}$ .

Embodiments of the present disclosure also provide a parameter estimation method based on an OFDM signal, in which, the second parameter is determined by the following equation:

$$\hat{v}_i = \frac{angle(\lambda_i^V)c}{4\pi f_c \overline{T}} \; ;$$

where, $v_i$ represents the second parameter, $\lambda_i^V$ is the second reference eigenvalue, $angle(•)$ represents obtaining a phase of a complex number, $c$ represents speed of light, $\overline{T}$ is a period of an OFDM symbol of the OFDM signal, and $f_c$ is a carrier frequency.

An equation for calculating the diagonal matrix $\Lambda^{\theta}$ can be expressed as:

$$\mathrm{diag}\left\{\mathbf{Q}^{-1}\hat{\mathbf{T}}^{\theta}\mathbf{Q}\right\} = \mathbf{\Lambda}^{\theta} \;;$$

$$\mathbf{\Lambda}^{\theta} = \mathrm{diag}\left\{\lambda_1^{\theta}, \lambda_2^{\theta}, \ldots, \lambda_K^{\theta}\right\}$$

where, .

Embodiments of the present disclosure also provide a parameter estimation method based on an OFDM signal, in which, the second parameter is determined by the following equation:

$$\hat{\theta}_i = \arcsin\left[\frac{\lambda \, angle(\lambda_i^{\theta})}{2\pi d}\right] * 180 / \pi \;;$$

where, $\hat{\theta}_i$ represents the second parameter, $\lambda_i^{\theta}$ is the second reference eigenvalue, $angle(\cdot)$ represents obtaining a phase of a complex number, $\lambda$ represents a wavelength, $d$ represents a spacing between different receiving antennas, and the OFDM signal is received by a receiving antenna.

That is to say, in embodiments of the present disclosure, the second parameter can be the speed $\hat{v}_i$ corresponding to the target, or the horizontal angle $\hat{\theta}_i$ corresponding to the target. In the process of obtaining different second parameters, corresponding acquisition equations can be configured based on the feature information corresponding to the second parameters, thereby effectively improving the practicality of the parameter estimation method.

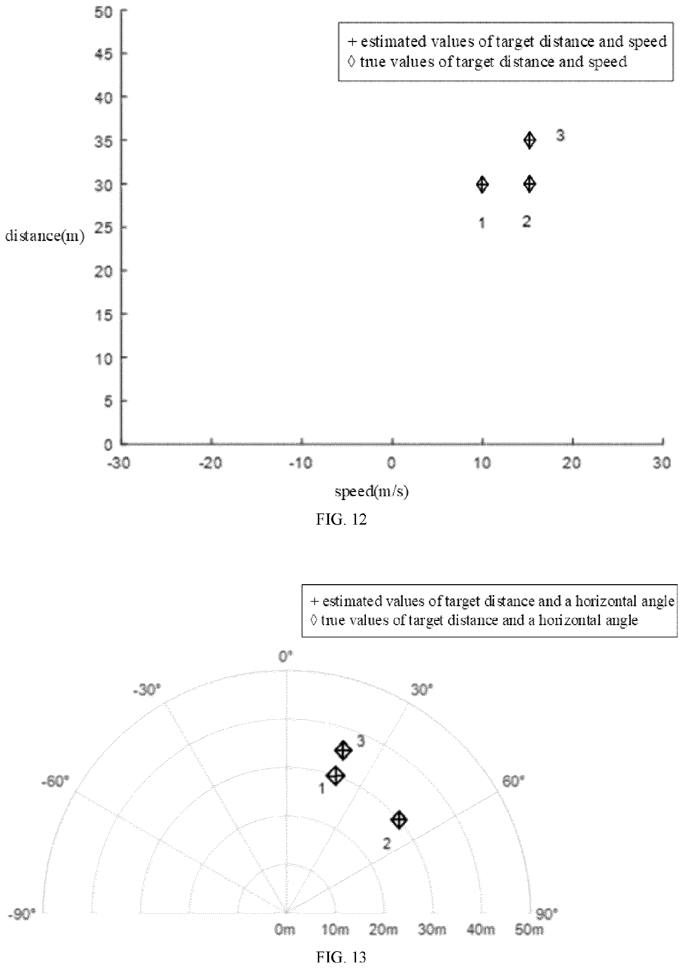

For example, if $f_c$ = 25 GHz, $\Delta f$ =120kHz, M = 56, $N$ = 56, $N_R$ = 16, $\tilde{M} = \tilde{N} = \tilde{P}$ = 10 is selected. If there are three targets in the environment: target 1, distance 30m, speed 10m/s, horizontal angle 20 °; target 2, distance 30m, speed 15m/s, horizontal angle 50°, target 3, distance 35m, speed 15m/s, horizontal angle 20°. Under a condition that the signal-to-noise ratio is 10dB, the parameter estimation method based on an OFDM signal proposed by the embodiments of the present disclosure is shown in FIG. 12 and FIG. 13. FIG. 12 is a schematic diagram illustrating range and speed of radar detection provided by an embodiment of the present disclosure. FIG. 13 is a schematic diagram illustrating range and a horizontal angle of radar detection provided by an embodiment of the present disclosure. Diamonds in FIG.s 12 and 13 represent true values of the target parameters. The plus sign represents an estimated value obtained by this method. The accuracy of the parameter estimation method based on an OFDM signal proposed by the embodiments of the present disclosure can be analyzed in FIG.s 12 and 13.

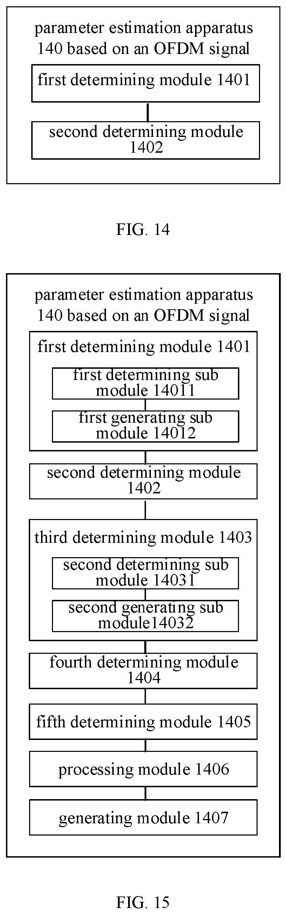

FIG. 14 is a block diagram of a parameter estimation apparatus based on an OFDM signal proposed by an embodiment of the present disclosure.

As shown in FIG. 14, the parameter estimation apparatus 140 based on an OFDM signal includes:

a first determining module 1401, configured to determine a first reference matrix related to the first parameter of the target according to the signal subspace matrix of the orthogonal frequency division multiplexing OFDM signal, in which the signal subspace matrix includes relevant information of at least one parameter; and
a second determining module 1402, configured to determine the first parameter based on the first reference feature value of the first reference matrix.

In some embodiments of the present disclosure, as shown in FIG. 15, FIG. 15 is a block diagram of a parameter estimation apparatus based on an OFDM signal proposed by another embodiment of the present disclosure, where the apparatus also includes:

a third determining module 1403, configured to determine a second reference matrix related to a second parameter of the target according to the signal subspace matrix; and
a fourth determining module 1404, configured to determine the second parameter according to a first eigen matrix of the first reference matrix and the second reference matrix.

In some embodiments of the present disclosure, the apparatus further includes:

a fifth determining module 1405, configured to determine a number of targets and a signal relevant matrix of the OFDM signal;
a processing module 1406, configured to obtain eigenvalues of the number of the targets and an eigenvector corresponding to each of the eigenvalues by performing eigenvalue decomposition on the signal relevant matrix; and

a generating module 1407, configured to generate the signal subspace matrix according to the eigenvectors of the number of the targets.

In some embodiments of the present disclosure, the fifth determining module 1405 is configured to:

determine an intermediate parameter based on an OFDM symbol transmitted by an $n^{th}$ subcarrier in an $m^{th}$ OFDM symbol of a $p^{th}$ receiving antenna in a sensing-communication system, in which the intermediate parameter carries the relevant information of the at least one parameter, and the OFDM signal is emitted by a transmitting antenna in the sensing-communication system, $p$ is a positive integer, and $p = 0, 1, ..., N_R - 1$, $N_R$ is a number of receiving antennas; and determine the signal relevant matrix of the OFDM signal according to the intermediate parameter.

In some embodiments of the present disclosure, the intermediate parameter is represented by:

$$\boldsymbol{\gamma}_{\tilde{p},\tilde{m},\tilde{n}} = \left[ \boldsymbol{\beta}_{\tilde{p},\tilde{m},\tilde{n}}^{T}, \boldsymbol{\beta}_{\tilde{p}+1,\tilde{m},\tilde{n}}^{T}, \cdots, \boldsymbol{\beta}_{\tilde{p}+\tilde{P}-1,\tilde{m},\tilde{n}}^{T} \right]^{T}$$

where, $\beta_{\tilde{p},\tilde{m},\tilde{n}} = \text{vec}(\mathbf{Z}_{\tilde{p},\tilde{m},\tilde{n}})$, vec ($\cdot$) represents a vectorization operator,

$$\mathbf{Z}_{\tilde{p},\tilde{m},\tilde{n}} = \begin{bmatrix} z_{\tilde{p},\tilde{m}}(\tilde{n}) & z_{\tilde{p},\tilde{m}}(\tilde{n}+1) & \dots & z_{\tilde{p},\tilde{m}}(\tilde{n}+\tilde{N}-1) \\ z_{\tilde{p},\tilde{m}+1}(\tilde{n}) & z_{\tilde{p},\tilde{m}+1}(\tilde{n}+1) & \dots & z_{\tilde{p},\tilde{m}+1}(\tilde{n}+\tilde{N}-1) \\ \vdots & \vdots & \ddots & \vdots \\ z_{\tilde{p},\tilde{m}+\tilde{M}-1}(\tilde{n}) & z_{\tilde{p},\tilde{m}+\tilde{M}-1}(\tilde{n}+1) & \dots & z_{\tilde{p},\tilde{m}+\tilde{M}-1}(\tilde{n}+\tilde{N}-1) \end{bmatrix}$$

where, $\gamma_{\tilde{p},\tilde{m},\tilde{n}}$ represents the intermediate parameter, $\tilde{m} = 0, 1, ..., M - \tilde{M}$, $\tilde{n} = 0, 1, ..., N - \tilde{N}$, $\tilde{p} = 0, 1, ..., N_R - \tilde{P}$, $\tilde{M}$ represents a size of a smoothing window along the OFDM symbol of the OFDM signal based on a time domain dimension, $\tilde{N}$ represents a size of the smoothing window along the subcarrier based on a frequency domain dimension, $\tilde{P}$ represents a size of the smoothing window along an antenna based on a spatial domain dimension.

In some embodiments of the present disclosure, the first determining module 1401 includes:

a first determining sub module 14011, configured to determine a first to-be-processed matrix and a second to-be-processed matrix related to the first parameter according to the signal subspace matrix; and a first generating sub module 14012, configured to generate the first reference matrix according to the first to-be-processed matrix and the second to-be-processed matrix.

In some embodiments of the present disclosure, the first determining sub module 14011 is configured to:

obtain the first to-be-processed matrix by multiplying a first row selection matrix and the signal subspace matrix; and obtain the second to-be-processed matrix by multiplying a second row selection matrix and the signal subspace matrix; in which, the first to-be-processed matrix does not carry information of the first parameter, and the second to-be-processed matrix carries the information of the first parameter.

In some embodiments of the present disclosure, the first generating sub module 14012 is configured to: obtain the first reference matrix by processing the first to-be-processed matrix and the second to-be-processed matrix based on a predefined equation.
In some embodiments of the present disclosure, the third determining module 1403 includes:

a second determining sub module 14031, configured to determine a third to-be-processed matrix and a fourth to-be-processed matrix related to the second parameter according to the signal subspace matrix; and a second generating sub module14032, configured to generate the second reference matrix according to the third to-be-processed matrix and the fourth to-be-processed matrix.

In some embodiments of the present disclosure, the second determining sub module 14031 is configured to:

obtain the third to-be-processed matrix by multiplying a third row selection matrix and the signal subspace matrix; and obtain the fourth to-be-processed matrix by multiplying a fourth row selection matrix and the signal subspace matrix; in which, the third to-be-processed matrix does not carry information of the second parameter, and the fourth to-be-processed matrix carries the information of the second parameter

In some embodiments of the present disclosure, the second generating sub module14032 is configured to: obtain the second reference matrix by processing the third to-be-processed matrix and the fourth to-be-processed matrix based on a predefined equation.

In some embodiments of the present disclosure, the first parameter is determined based on a following equation:

$$\hat{R}_i = -\frac{\text{angle}(\lambda_i^R)c}{4\pi\Delta f}, i = 1, 2, \ldots, K$$

in which, $\hat{R}_i$ represents the first parameter of the target, $i$ represents an index of the target, i is a positive integer less than or equal to $K$, $K$ represents a number of targets, $angle(\cdot)$ represents obtaining a phase of a complex number, $\lambda_i^R$ represents a first reference eigenvalue corresponding to the target in the first reference matrix $\hat{T}^R$, $c$ represents speed of light, and $\Delta f$ represents a subcarrier spacing of the OFDM signal.

In some embodiments of the present disclosure, the fourth determining module 1404 is configured to:

determine a second reference eigenvalue of the second reference matrix according to the first eigen matrix and the second reference matrix; and
determine the second parameter according to the second reference eigenvalue.

In some embodiments of the present disclosure, the second parameter is determined by a following equation:

$$\hat{v}_i = \frac{angle(\lambda_i^V)c}{4\pi f_c \overline{T}}$$

in which, $\hat{v}_i$ represents the second parameter, $\lambda_i^V$ is the second reference eigenvalue, $angle(\cdot)$ represents obtaining a phase of a complex number, $c$ represents speed of light, $\overline{T}$ is a period of an OFDM symbol of the OFDM signal, and $f_c$ is a carrier frequency.

In some embodiments of the present disclosure, the second parameter is determined by a following equation:

$$\hat{\theta}_i = \arcsin\left[\frac{\lambda angle(\lambda_i^\theta)}{2\pi d}\right] * 180 / \pi$$

in which, $\hat{\theta}_i$ represents the second parameter, $\lambda_i^\theta$ is the second reference eigenvalue, $angle(\cdot)$ represents obtaining a phase of a complex number, $\lambda$ represents a wavelength, $d$ represents a spacing between different receiving antennas, and the OFDM signal is received by a receiving antenna.

In some embodiments of the present disclosure, in which,

the first row selection matrix is:

$$J_1^R \overset{\Delta}{=} I_{\underset{P}{\sim}} \otimes \left[ I_{\underset{\tilde{M}(\tilde{N}-1)}{\sim}}, 0_{\underset{\tilde{M}(\tilde{N}-1)\times\tilde{M}}{\sim}} \right];$$

and

the second row selection matrix is:

$$J_2^R \triangleq I_{\tilde{P}} \otimes \left[ 0_{\tilde{M}(\tilde{N}-1)\times\tilde{M}} , I_{\tilde{M}(\tilde{N}-1)} \right];$$

in which, $J_1^R$ represents the first row selection matrix, $J_2^R$ represents the second row selection matrix, $\otimes$ represents a Kronecker product, $I_{\tilde{P}}$ represents an identity matrix with $\tilde{P}$ rows and $P$ columns, $I_{\tilde{M}(\tilde{N}-1)}$ represents an identity matrix with $\tilde{M}(\tilde{N}-1)$ rows and $\tilde{M}(\tilde{N}-1)$ columns, $0_{\tilde{M}(\tilde{N}-1)\times\tilde{M}}$ represents an all-zero matrix with $\tilde{M}(\tilde{N}-1)$ rows and $\tilde{M}$ columns, $\tilde{M}$ represents a size of a smoothing window along an OFDM symbol of the OFDM signal based on a time domain dimension, $\tilde{N}$ represents a size of the smoothing window along a subcarrier based on a frequency domain dimension, and $\tilde{P}$ represents a size of the smoothing window along an antenna based on a spatial domain dimension.

In some embodiments of the present disclosure, in which,

the third row selection matrix is:

$$J_1^V \triangleq I_{\tilde{P}} \otimes I_{\tilde{N}} \otimes \left[ I_{(\tilde{M}-1)} , 0_{(\tilde{M}-1)\times 1} \right],$$

or

$$J_1^\theta \triangleq \left[ I_{\tilde{M}\tilde{N}(\tilde{P}-1)} , 0_{\tilde{M}\tilde{N}(\tilde{P}-1)\times\tilde{M}\tilde{N}} \right];$$

the fourth row selection matrix is:

$$J_2^V \triangleq I_{\tilde{P}} \otimes I_{\tilde{N}} \otimes \left[ 0_{(\tilde{M}-1)\times 1} , I_{(\tilde{M}-1)} \right],$$

or

$$J_2^\theta \triangleq \left[ 0_{\tilde{M}\tilde{N}(\tilde{P}-1)\times\tilde{M}\tilde{N}} , I_{\tilde{M}\tilde{N}(\tilde{P}-1)} \right];$$

in which, $J_1^V / J_1^\theta$ represents the third row selection matrix, $J_2^V / J_2^\theta$ represents the fourth row selection matrix, $\otimes$ represents a Kronecker product, $I_{\tilde{P}}$ represents an identity matrix with $\tilde{P}$ rows and $\tilde{P}$ columns, $I_{\tilde{N}}$ represents an identity matrix with $\tilde{N}$ rows and $\tilde{N}$ columns, $I_{(\tilde{M}-1)}$ represents an identity matrix with $(\tilde{M}-1)$ rows and $(\tilde{M}-1)$ columns, $I_{\tilde{M}\tilde{N}(\tilde{P}-1)}$ represents an identity matrix with $\tilde{M}\tilde{N}(\tilde{P}-1)$ rows and $\tilde{M}\tilde{N}(\tilde{P}-1)$ columns, $0_{\tilde{M}\tilde{N}(\tilde{P}-1)\times\tilde{M}\tilde{N}}$ represents an all-zero matrix with $\tilde{M}\tilde{N}(\tilde{P}-1)$ rows and $\tilde{M}\tilde{N}$ columns, $0_{(\tilde{M}-1)\times 1}$ represents an all-zero matrix with $(\tilde{M}-1)$ rows and 1 column, $\tilde{M}$ represents a size of a smoothing window along an OFDM symbol of the OFDM signal based on a time domain dimension, $\tilde{N}$ represents a size of the smoothing window along a subcarrier based on a frequency domain dimension, $\tilde{P}$ represents a size of the smoothing window along an antenna based on a spatial domain dimension.

In some embodiments of the present disclosure, the predefined equation is:

$$\hat{T} = ( (\hat{U}_1)^H \hat{U}_1 )^{-1} (\hat{U}_1)^H \hat{U}_2$$

in which, $\hat{T}$ is $\hat{\mathbf{T}}^R$, $\hat{\mathbf{T}}^V$ or $\hat{\mathbf{T}}^\theta$, $\hat{U}_1$ is $\mathbf{U}_1^R$, $\mathbf{U}_1^V$ or $\mathbf{U}_1^\theta$, $\hat{U}_2$ is $\mathbf{U}_2^R$, $\mathbf{U}_2^V$ or $\mathbf{U}_2^\theta$, $()^H$ represents a conjugate transpose of a matrix, $()^{-1}$ represents a transpose of a matrix.

Corresponding to the parameter estimation method based on an OFDM signal provided by the above embodiments of FIG.s 1 to 13, the present disclosure also provides a parameter estimation apparatus based on an OFDM signal. The parameter estimation apparatus based on an OFDM signal provided by the embodiments corresponds to the parameter estimation method based on an OFDM signal provided by the above embodiments of FIG.s 1 to 13. Therefore, the implementation of the parameter estimation method based on an OFDM signal is also applicable to the parameter estimation apparatus based on an OFDM signal provided in the embodiments of the disclosure, and will not be described in detail in embodiments of the disclosure.

In this embodiment, the first reference matrix related to the first parameter of the target is determined according to the signal subspace matrix of the OFDM signal, the signal subspace matrix includes relevant information of at least one parameter, and the first parameter is determined based on the first reference eigenvalue of the first reference matrix, which can reduce the parameter acquisition cost for the target and effectively improve the parameter sensing accuracy for the target.

In order to implement the above embodiments, the present disclosure also proposes an electronic device, including: a memory, a processor, and a computer program stored in the memory and executable on the processor. When the processor executes the computer program, the parameter estimation method based on an OFDM signal according to the aforementioned embodiments of the present disclosure is performed.

In order to implement the above embodiments, the present disclosure also proposes a non-transitory computer-readable storage medium on which a computer program is stored. When the program is executed by a processor, the parameter estimation method based on an OFDM signal as proposed in the foregoing embodiments of the present disclosure is performed.

In order to implement the above embodiments, the present disclosure also proposes a computer program product. When instruction in the computer program product are executed by a processor, the parameter estimation method based on an OFDM signal as proposed in the foregoing embodiments of the present disclosure is performed.

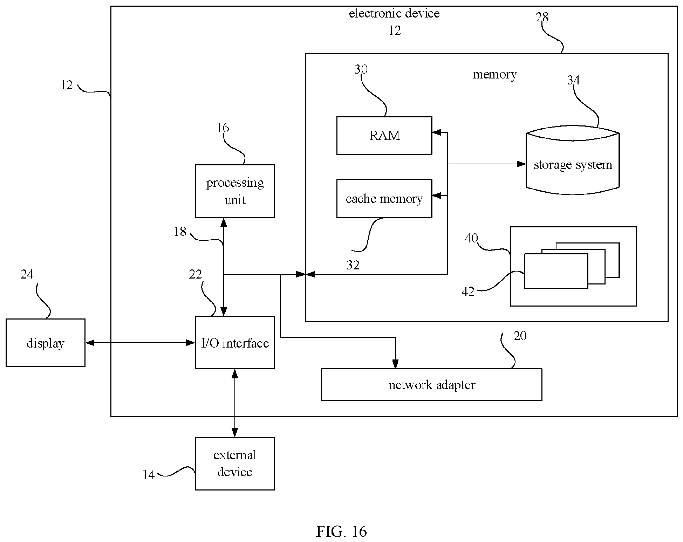

FIG. 16 illustrates a block diagram of an exemplary electronic device suitable for implementing embodiments of the present disclosure. The electronic device 12 shown in FIG. 16 is only an example and should not bring any limitations to the functions and scope of use of the embodiments of the present disclosure.

As shown in FIG. 16, the electronic device 12 is embodied in the form of a general computing device. The components of the electronic device 12 may include, but are not limited to: one or more processors or processing units 16, a system memory 28, and a bus 18 connecting various system components (including the system memory 28 and the processing unit 16).

The bus 18 represents one or more of several types of bus structures, including a memory bus or a memory controller, a peripheral bus, a graphics acceleration port, a processor, or a local bus using any of a variety of bus structures. For example, these structures include, but are not limited to, the Industry Standard Architecture (hereinafter referred to as ISA) bus, the Micro Channel Architecture (hereinafter referred to as MAC) bus, the enhanced ISA bus, the video electronics Standards Association (hereinafter referred to as VESA) local bus, and the Peripheral Component Interconnection (hereinafter referred to as: PCI) bus.

The electronic device 12 typically includes a variety of computer system readable media. These media can be any available media that can be accessed by the electronic device 12, including volatile and nonvolatile media, removable and non-removable media.

The memory 28 may include a computer system-readable medium in the form of volatile memory, such as a random access memory (hereinafter referred to as RAM) 30 and/or a cache memory 32. The electronic device 12 may further include other removable/non-removable, volatile/non-volatile computer system storage media. By way of example only, the storage system 34 may be used to read from and write to the non-removable, non-volatile magnetic media (not shown in FIG. 16, commonly referred to as a "hard drive").

Although not shown in FIG. 16, a disk drive for reading from and writing to a removable non-volatile disk (e.g., a "floppy disk") and a disk drive for reading from and writing to a removable non-volatile optical disk (e.g., a compact disk read-only memory (hereinafter referred to as CD-ROM), a Digital Video Disc Read Only Memory (hereinafter referred to as DVD-ROM) or other optical media) may be provided. In these cases, each drive may be connected to bus 18 through one or more data media interfaces. The memory 28 may include at least one program product having a set (e.g., at least one) of program modules configured to perform the functions of embodiments of the present disclosure.

A program/utility 40 having a set of (at least one) program modules 42, including but not limited to an operating system, one or more application programs, other program modules, and program data, may be stored, for example, in the memory 28, each of these examples or a certain combination of these examples may include the implementation of a network environment. The program module 42 generally performs functions and/or methods in the embodiments described in this disclosure.

The electronic device 12 may also communicate with one or more external devices 14 (e.g., a keyboard, a pointing device, a display 24, etc.), may also communicate with one or more devices that enable a user to interact with the electronic device 12, and/or communicate with any device (e.g., a network card, a modem, etc.) that enables the electronic device 12 to communicate with one or more other computing devices. This communication may occur through an input/output (I/O) interface 22. Moreover, the electronic device 12 can also communicate with one or more networks (such as a local area network (hereinafter referred to as LAN), a wide area network (hereinafter referred to as WAN) and/or a public network, such as the Internet) through a network adapter 20. As shown in the FIGs, the network adapter 20 communicates with other modules of the electronic device 12 via the bus 18. It should be understood that, although not shown in the FIGs, other hardware and/or software modules may be used in conjunction with the electronic device 12, including but not limited to microcode, device drivers, redundant processing units, external disk drive arrays, RAID systems, tape drives and data backup storage system, etc.

The processing unit 16 executes programs stored in the system memory 28 to perform various function applications and data processing, such as implementing the parameter estimation method based on an OFDM signal mentioned in the above embodiments.

Other embodiments of the disclosure will be readily apparent to those skilled in the art from consideration of the specification and practice of the disclosure herein. The present disclosure is intended to cover any variations, uses, or adaptations of the disclosure that follow the general principles of the disclosure and include common sense or customary technical means in the technical field that are not disclosed in the disclosure. It is intended that the specification and examples are considered as exemplary only, with a true scope and spirit of the disclosure being indicated by the appended claims.

It is to be understood that the present disclosure is not limited to the precise structures described above and illustrated in the accompanying drawings, and various modifications and changes may be made without departing from the scope thereof. The scope of the disclosure is limited only by the appended claims.

It should be noted that in the description of the present disclosure, the terms "first", "second", etc. are only used for descriptive purposes and cannot be understood as indicating or implying relative importance. Furthermore, in the description of the present disclosure, "plurality" means two or more unless otherwise specified.

Any process or method description in the flowcharts or otherwise described herein in other manners may be understood as representing a module, segment, or portion of code that include one or more executable instructions for implementing the specified logic functions or steps of the process. The scope of the preferred embodiments of the present disclosure includes additional implementations, in which functions may be performed out of the order shown or discussed, including in a substantially simultaneous manner or in the reverse order depending on the functions involved, which should be understood by those skilled in the technical field to which embodiments of the present disclosure belong.

It should be understood that various parts of the present disclosure may be implemented by hardware, software, firmware, or any combination thereof. In the above embodiments, various steps or methods may be implemented in software or firmware stored in a memory and executed by a suitable instruction execution system. For example, if it is implemented in hardware, as in another embodiment, it can be implemented by any one or a combination of the following technologies known in the art: discrete logic circuits with a logic gate circuit for implementing a logic function on a data signal, specific integrated circuits with suitable combination logic gate circuits, programmable gate arrays (PGA), field programmable gate arrays (FPGA), etc.

Those skilled in the art can understand that all or part of the steps involved in implementing the methods of the above embodiments can be completed by instructing relevant hardware through a program. The program can be stored in a computer-readable storage medium. When the program is executed, one of or a combination of the steps of the method embodiments is included.

In addition, each function unit in various embodiments of the present disclosure may be integrated into one processing module, or each unit may exist physically alone, or two or more units may be integrated into one module. The above integrated module can be implemented in the form of hardware or software function modules. If the integrated module is implemented in the form of a software function module and sold or used as an independent product, it can also be stored in a computer-readable storage medium.

The storage media mentioned above can be a read-only memory, a magnetic disk or an optical disk, etc.

In the description of this specification, reference to the terms "an embodiment," "some embodiments," "an example," "specific examples," or "some examples" or the like means that specific features, structures, materials, or characteristics described in connection with the embodiments or examples are included in at least one embodiment or example of the present disclosure. In this specification, schematic representations of the above terms do not necessarily refer to the same embodiment or example. Furthermore, the specific features, structures, materials or characteristics described may be combined in any suitable manner in any one or more embodiments or examples.

Although the embodiments of the present disclosure have been shown and described above, it can be understood that the above-mentioned embodiments are illustrative and should not be construed as limitations of the present disclosure. Those skilled in the art can make changes, modifications, substitutions and variations to the above-mentioned embodiments within the scope of the present disclosure.

**Claims**

1.  A parameter estimation method based on an orthogonal frequency division multiplexing (OFDM) signal, comprising:

    determining a first reference matrix related to a first parameter of a target according to a signal subspace matrix of the OFDM signal, wherein the signal subspace matrix comprises relevant information of at least one parameter; and
    determining the first parameter based on a first reference eigenvalue of the first reference matrix.

2.  The method of claim 1, further comprising:

    determining a second reference matrix related to a second parameter of the target according to the signal subspace matrix; and
    determining the second parameter according to a first eigen matrix of the first reference matrix and the second reference matrix.

3.  The method of claim 1 or 2, further comprising:

    determining a number of targets and a signal relevant matrix of the OFDM signal;
    obtaining eigenvalues of the number of the targets and an eigenvector corresponding to each of the eigenvalues by performing eigenvalue decomposition on the signal relevant matrix; and
    generating the signal subspace matrix according to the eigenvectors of the number of the targets.

4.  The method of claim 3, wherein determining the signal relevant matrix of the OFDM signal comprises:

    determining an intermediate parameter based on an OFDM symbol transmitted by an $n^{th}$ subcarrier in an $m^{th}$ OFDM symbol of a $p^{th}$ receiving antenna in a sensing-communication system, wherein the intermediate parameter carries the relevant information of the at least one parameter, and the OFDM signal is emitted by a transmitting antenna in the sensing-communication system, $p$ is a positive integer, and $p = 0,1, ..., N_R$ -1, $N_R$ is a number of receiving antennas; and
    determining the signal relevant matrix of the OFDM signal according to the intermediate parameter.

5.  The method of claim 4, wherein the intermediate parameter is represented by:

$$\boldsymbol{\gamma}_{\tilde{p},\tilde{m},\tilde{n}} = \left[ \boldsymbol{\beta}^{T}_{\tilde{p},\tilde{m},\tilde{n}}, \boldsymbol{\beta}^{T}_{\tilde{p}+1,\tilde{m},\tilde{n}}, \cdots, \boldsymbol{\beta}^{T}_{\tilde{p}+\tilde{P}-1,\tilde{m},\tilde{n}} \right]^{T}$$

wherein, $\beta_{\tilde{p},\tilde{m},\tilde{n}}$ = vec($\mathbf{Z}_{\tilde{p},\tilde{m},\tilde{n}}$) , vec ($\bullet$ ) represents a vectorization operator,

$$\mathbf{Z}_{\tilde{p},\tilde{m},\tilde{n}} = \begin{bmatrix} z_{\tilde{p},\tilde{m}}(\tilde{n}) & z_{\tilde{p},\tilde{m}}(\tilde{n}+1) & \ldots & z_{\tilde{p},\tilde{m}}(\tilde{n}+\tilde{N}-1) \\ z_{\tilde{p},\tilde{m}+1}(\tilde{n}) & z_{\tilde{p},\tilde{m}+1}(\tilde{n}+1) & \ldots & z_{\tilde{p},\tilde{m}+1}(\tilde{n}+\tilde{N}-1) \\ \vdots & \vdots & \ddots & \vdots \\ z_{\tilde{p},\tilde{m}+\tilde{M}-1}(\tilde{n}) & z_{\tilde{p},\tilde{m}+\tilde{M}-1}(\tilde{n}+1) & \ldots & z_{\tilde{p},\tilde{m}+\tilde{M}-1}(\tilde{n}+\tilde{N}-1) \end{bmatrix}$$

wherein, $\gamma_{\tilde{p},\tilde{m},\tilde{n}}$ represents the intermediate parameter, $\tilde{m}$ = 0,1,..., M - $\tilde{M}$, $\tilde{n}$ = 0,1,..., N - $\tilde{N}$, $p$ = 0,1,..., $N_R$ - $\tilde{P}$, $\tilde{M}$ represents a size of a smoothing window along the OFDM symbol of the OFDM signal based on a time domain dimension, $\tilde{N}$ represents a size of the smoothing window along the subcarrier based on a frequency domain dimension, $\tilde{P}$ represents a size of the smoothing window along an antenna based on a spatial domain dimension.

**6.** The method of claim 1, wherein determining the first reference matrix related to the first parameter of the target according to the signal subspace matrix of the OFDM signal comprises:

determining a first to-be-processed matrix and a second to-be-processed matrix related to the first parameter according to the signal subspace matrix; and
generating the first reference matrix according to the first to-be-processed matrix and the second to-be-processed matrix.

**7.** The method of claim 6, wherein determining the first to-be-processed matrix and the second to-be-processed matrix related to the first parameter according to the signal subspace matrix comprises:

obtaining the first to-be-processed matrix by multiplying a first row selection matrix and the signal subspace matrix; and
obtaining the second to-be-processed matrix by multiplying a second row selection matrix and the signal subspace matrix;
wherein, the first to-be-processed matrix does not carry information of the first parameter, and the second to-be-processed matrix carries the information of the first parameter.

**8.** The method of claim 6, wherein generating the first reference matrix according to the first to-be-processed matrix and the second to-be-processed matrix comprises:
obtaining the first reference matrix by processing the first to-be-processed matrix and the second to-be-processed matrix based on a predefined equation.

**9.** The method of claim 2, wherein determining the second reference matrix related to the second parameter of the target according to the signal subspace matrix comprises:

determining a third to-be-processed matrix and a fourth to-be-processed matrix related to the second parameter according to the signal subspace matrix; and
generating the second reference matrix according to the third to-be-processed matrix and the fourth to-be-processed matrix.

**10.** The method of claim 9, wherein determining the third to-be-processed matrix and the fourth to-be-processed matrix related to the second parameter according to the signal subspace matrix comprises:

obtaining the third to-be-processed matrix by multiplying a third row selection matrix and the signal subspace matrix; and
obtaining the fourth to-be-processed matrix by multiplying a fourth row selection matrix and the signal subspace matrix;
wherein, the third to-be-processed matrix does not carry information of the second parameter, and the fourth to-be-processed matrix carries the information of the second parameter.

**11.** The method of claim 9, wherein generating the second reference matrix according to the third to-be-processed matrix and the fourth to-be-processed matrix comprises:
obtaining the second reference matrix by processing the third to-be-processed matrix and the fourth to-be-processed matrix based on a predefined equation.

**12.** The method of claim 1, wherein the first parameter is determined based on a following equation:

$$\hat{R}_i = -\frac{\text{angle}(\lambda_i^R)c}{4\pi\Delta f}, i = 1, 2, \ldots, K \ ;$$

wherein, $\hat{R}_i$ represents the first parameter of the target, $i$ represents an index of the target, $i$ is a positive integer less than or equal to $K$, $K$ represents a number of targets, $angle$ (•) represents obtaining a phase of a complex number, $\lambda_i^R$ represents a first reference eigenvalue corresponding to the target in the first reference matrix $\hat{T}^R$, $c$ represents speed of light, and $\Delta f$ represents a subcarrier spacing of the OFDM signal.

**13.** The method of claim 2, wherein determining the second parameter according to the first characteristic matrix of the first reference matrix and the second reference matrix comprises:

determining a second reference eigenvalue of the second reference matrix according to the first eigen matrix and the second reference matrix; and
determining the second parameter according to the second reference eigenvalue.

**14.** The method of claim 13, wherein the second parameter is determined by a following equation:

$$\hat{v}_i = \frac{angle(\lambda_i^V)c}{4\pi f_c \overline{\overline{T}}};$$

wherein, $\hat{v}_i$ represents the second parameter, $\lambda_i^V$ is the second reference eigenvalue, $angle(\cdot)$ represents obtaining a phase of a complex number, $c$ represents speed of light, $\overline{T}$ is a period of an OFDM symbol of the OFDM signal, and $f_c$ is a carrier frequency.

**15.** The method of claim 13, wherein the second parameter is determined by a following equation:

$$\hat{\theta}_i = \arcsin\left[\frac{\lambda angle(\lambda_i^\theta)}{2\pi d}\right] * 180/\pi;$$

wherein, $\hat{\theta}_i$ represents the second parameter, $\lambda_i^\theta$ is the second reference eigenvalue, $angle(\cdot)$ represents obtaining a phase of a complex number, $\lambda$ represents a wavelength, $d$ represents a spacing between different receiving antennas, and the OFDM signal is received by a receiving antenna.

**16.** The method of claim 7, wherein,

the first row selection matrix is:

$$J_1^R \overset{\Delta}{=} I_{\tilde{P}} \otimes \left[ I_{\tilde{M}(\tilde{N}-1)}, 0_{\tilde{M}(\tilde{N}-1)\times\tilde{M}} \right];$$

and
the second row selection matrix is:

$$J_2^R \overset{\triangle}{=} I_{\tilde{P}} \otimes \left[ 0_{\tilde{M}(\tilde{N}-1)\times\tilde{M}}, I_{\tilde{M}(\tilde{N}-1)} \right];$$

wherein, $J_1^R$ represents the first row selection matrix, $J_2^R$ represents the second row selection matrix, $\otimes$ represents a Kronecker product, $I_{\tilde{P}}$ represents an identity matrix with $\tilde{P}$ rows and $\tilde{P}$ columns, $I_{\tilde{M}(\tilde{N}-1)}$ represents an identity matrix with $\tilde{M}(\tilde{N}-1)$ rows and $\tilde{M}(\tilde{N}-1)$ columns, $0_{\tilde{M}(\tilde{N}-1)\times\tilde{M}}$ represents an all-zero matrix with $\tilde{M}(\tilde{N}-1)$ rows and $\tilde{M}$ columns, $\tilde{M}$ represents a size of a smoothing window along an OFDM symbol of the OFDM signal based on a time domain dimension, $\tilde{N}$ represents a size of the smoothing window along a subcarrier based on a frequency domain dimension, and $\tilde{P}$ represents a size of the smoothing window along an antenna based on a spatial domain dimension.

**17.** The method of claim 10, wherein,

the third row selection matrix is:

$$J_1^V \triangleq I_{\tilde{P}} \otimes I_{\tilde{N}} \otimes \left[ I_{(\tilde{M}-1)}, 0_{(\tilde{M}-1)\times 1} \right],$$

or

$$J_1^\theta \triangleq \left[ I_{\tilde{M}\tilde{N}(\tilde{P}-1)}, 0_{\tilde{M}\tilde{N}(\tilde{P}-1)\times\tilde{M}\tilde{N}} \right];$$

the fourth row selection matrix is:

$$J_2^V \triangleq I_{\tilde{P}} \otimes I_{\tilde{N}} \otimes \left[ 0_{(\tilde{M}-1)\times 1}, I_{(\tilde{M}-1)} \right],$$

, or

$$J_2^\theta \triangleq \left[ 0_{\tilde{M}\tilde{N}(\tilde{P}-1)\times\tilde{M}\tilde{N}}, I_{\tilde{M}\tilde{N}(\tilde{P}-1)} \right];$$

wherein, $J_1^V$ or $J_1^\theta$ represents the third row selection matrix, $J_2^V$ or $J_2^\theta$ represents the fourth row selection matrix, $\otimes$ represents a Kronecker product, $I_{\tilde{P}}$ represents an identity matrix with $\tilde{P}$ rows and $\tilde{P}$ columns, $I_{\tilde{N}}$ represents an identity matrix with $\tilde{N}$ rows and $\tilde{N}$ columns, $I_{(\tilde{M}-1)}$ represents an identity matrix with ($\tilde{M}$-1) rows and ($\tilde{M}$-1) columns, $I_{\tilde{M}\tilde{N}(\tilde{P}-1)}$ represents an identity matrix with $\tilde{M}\tilde{N}(\tilde{P}-1)$ rows and $\tilde{M}\tilde{N}(\tilde{P}-1)$ columns, $0_{\tilde{M}\tilde{N}(\tilde{P}-1)\times\tilde{M}\tilde{N}}$ represents an all-zero matrix with $\tilde{M}\tilde{N}(\tilde{P}-1)$ rows and $\tilde{M}\tilde{N}$ columns, $0_{(\tilde{M}-1)\times 1}$ represents an all-zero matrix with ($\tilde{M}$-1) rows and 1 column, $\tilde{M}$ represents a size of a smoothing window along an OFDM symbol of the OFDM signal based on a time domain dimension, $\tilde{N}$ represents a size of the smoothing window along a subcarrier based on a frequency domain dimension, $\tilde{P}$ represents a size of the smoothing window along an antenna based on a spatial domain dimension.

18. The method of claim 8 or 11, wherein the predefined equation is:

$$\hat{T} = (\ (\hat{U}_1)^H \hat{U}_1\ )^{-1}(\hat{U}_1)^H \hat{U}_2 ;$$

wherein, $\hat{T}$ is $\hat{T}^R$, $\hat{T}^V$ or $\hat{T}^\theta$, $\hat{U}_1$ is $\mathbf{U}_1^R$, $\mathbf{U}_1^V$ or $\mathbf{U}_1^\theta$, $\hat{U}_2$ is $\mathbf{U}_2^R$, $\mathbf{U}_2^V$ or $\mathbf{U}_2^\theta$, $()^H$ represents a conjugate transpose of a matrix, $()^{-1}$ represents a transpose of a matrix.

19. A parameter estimation apparatus based on an orthogonal frequency division multiplexing (OFDM) signal, comprising:

a first determining module, configured to determine a first reference matrix related to a first parameter of a target according to a signal subspace matrix of the OFDM signal, wherein the signal subspace matrix comprises relevant information of at least one parameter; and
a second determining module, configured to determine the first parameter based on a first reference eigenvalue of the first reference matrix.

20. An electronic device, comprising:

at least one processor; and

a memory communicatively connected to the at least one processor; wherein,

the memory stores instructions executable by the at least one processor, and the instructions are executed by the at least one processor to cause the at least one processor to perform the parameter estimation method based on an orthogonal frequency division multiplexing (OFDM) signal of any one of claims 1-18.

21. A non-transitory computer-readable storage medium for storing computer instructions, wherein the computer instructions are configured to cause a computer to perform the parameter estimation method based on an orthogonal frequency division multiplexing (OFDM) signal of any one of claims 1-18.

determining a first reference matrix related to a first parameter of a
target according to a signal subspace matrix of the OFDM signal,
wherein the signal subspace matrix comprises relevant information of at
least one parameter

S101

determining the first parameter based on a first reference eigenvalue of
the first reference matrix

S201

FIG. 1

binary data

modulation

serial-to-parallel
conversion

radar signal
processing

Inverse Discrete
Fourier Transform

cyclic prefix

parallel-to-serial
conversion

digital-to-analog
conversion

sending

binary data

demodulation

parallel-to-serial
conversion

Discrete Fourier
Transform

removal of cyclic
prefix

serial-to-parallel
conversion

analog-to-digital
conversion

receiving

FIG. 2

FIG. 3

| determining a second reference matrix related to a second parameter of the target according to the signal subspace matrix | S104 |

| determining the second parameter according to a first eigen matrix of the first reference matrix and the second reference matrix | S204 |

FIG. 4

| determining a number of targets and a signal relevant matrix of the OFDM signal | S105 |

| obtaining eigenvalues of the number of the targets and an eigenvector corresponding to each of the eigenvalues by performing eigenvalue decomposition on the signal relevant matrix | S205 |

| generating the signal subspace matrix according to the eigenvectors of the number of the targets | S305 |

FIG. 5

| determining an intermediate parameter based on an OFDM symbol transmitted by an subcarrier in an OFDM symbol of a receiving antenna in a sensing-communication system | S106 |

| determining the signal relevant matrix of the OFDM signal according to the intermediate parameter | S206 |

FIG. 6

| determining a first to-be-processed matrix and a second to-be-processed matrix related to the first parameter according to the signal subspace matrix | S107 |

↓

| generating the first reference matrix according to the first to-be-processed matrix and the second to-be-processed matrix | S207 |

FIG. 7

| obtaining the first to-be-processed matrix by multiplying a first row selection matrix and the signal subspace matrix, the first to-be-processed matrix does not carry information of the first parameter | S108 |

↓

| obtaining the second to-be-processed matrix by multiplying a second row selection matrix and the signal subspace matrix, the second to-be-processed matrix carries the information of the first parameter | S208 |

FIG. 8

| determining a third to-be-processed matrix and a fourth to-be-processed matrix related to the second parameter according to the signal subspace matrix | S109 |

↓

| generating the second reference matrix according to the third to-be-processed matrix and the fourth to-be-processed matrix | S209 |

FIG. 9

| obtaining the third to-be-processed matrix by multiplying a third row selection matrix and the signal subspace matrix, the third to-be-processed matrix does not carry information of the second parameter | S110 |

↓

| obtaining the fourth to-be-processed matrix by multiplying a fourth row selection matrix and the signal subspace matrix, the fourth to-be-processed matrix carries the information of the second parameter | S210 |

FIG. 10

| determining a second reference eigenvalue of the second reference matrix according to the first eigen matrix and the second reference matrix | S111 |

↓

| determining the second parameter according to the second reference eigenvalue | S211 |

FIG. 11

FIG. 12

FIG. 13

parameter estimation apparatus 140 based on an OFDM signal

first determining module 1401

second determining module 1402

FIG. 14

parameter estimation apparatus 140 based on an OFDM signal

first determining module 1401

first determining sub module 14011

first generating sub module 14012

second determining module 1402

third determining module 1403

second determining sub module 14031

second generating sub module14032

fourth determining module 1404

fifth determining module 1405

processing module 1406

generating module 1407

FIG. 15

electronic device 12

28

12

16

30

RAM

memory

34

storage system

processing unit

cache memory

18

40

32

42

24

22

display

I/O interface

20

network adapter

14

external device

FIG. 16

## INTERNATIONAL SEARCH REPORT

| International application No. |
| --- |
| **PCT/CN2022/106587** |

| A. | CLASSIFICATION OF SUBJECT MATTER |
| --- | --- |

H04L27/00(2006.01)i;H04L27/26(2006.01)i;H04W64/00(2009.01)i

According to International Patent Classification (IPC) or to both national classification and IPC

| B. | FIELDS SEARCHED |
| --- | --- |

Minimum documentation searched (classification system followed by classification symbols)

IPC:H04L27/-; H04W64/-

Documentation searched other than minimum documentation to the extent that such documents are included in the fields searched

Electronic data base consulted during the international search (name of data base and, where practicable, search terms used)

CNABS; CNTXT; CNKI; VEN; DWPI; USTXT; EPTXT; WOTXT; IEEE; 3GPP: 通感, 通感一体, 通信感知, 参考, 信号, 矩阵, 参考矩阵, 空间矩阵, 信号子空间矩阵, 参数, 距离, 水平角, 速度, 正交频分复用, sensing, communication, integrated, ISAC, OFDM, orthogonal frequency division multiplexing, parameter, matrix, distance, interval, rate, speed, horizontal angle

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 114599086 A (BEIJING UNIVERSITY OF POSTS AND TELECOMMUNICATIONS) 2022-06-07 (2022-06-07)<br>description, paragraphs 0134-0259 and 0292-0294 | 1-4, 6-11, 13, 18-21 |
| A | CN 113542162 A (HANGZHOU DIANZI UNIVERSITY) 2021-10-22 (2021-10-22)<br>entire document | 1-21 |
| A | CN 114325679 A (SOUTH UNIVERSITY OF SCIENCE AND TECHNOLOGY et al.) 2022-04-12 (2022-04-12)<br>entire document | 1-21 |
| A | US 2021286045 A1 (BAYESTEH ALIREZA et al.) 2021-09-16 (2021-09-16)<br>entire document | 1-21 |
| A | WO 2021237495 A1 (QUALCOMM INCORPORATED et al.) 2021-12-02 (2021-12-02)<br>entire document | 1-21 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **04 April 2023** | **10 April 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**EP 4 560 992 A1**

**INTERNATIONAL SEARCH REPORT**

| International application No. |
| --- |
| **PCT/CN2022/106587** |

**C.    DOCUMENTS CONSIDERED TO BE RELEVANT**

| Category* | Citation of document, with indication, where appropriate, of the relevant passages | Relevant to claim No. |
| --- | --- | --- |
| A | 吉静 等 (JI, Jing et al.). "一种通感一体化的信号设计与性能分析 (A Novel Signal Design and Performance Analysis for Integrated Sensing and Communication)" <br> 移动通信 (Mobile Communications), 2022-05-15 (2022-05-15), <br>   entire document | 1-21 |
| A | WANG, Yuan et al. "Triangular FM-OFDM Waveform Design for Integrated Sensing and Communication" <br> WS07 IEEE ICC 2022 the 4th Workshop on Integrated Sensing and Communication (ISAC), 2022-05-20 (2022-05-20), <br>   entire document | 1-21 |

Form PCT/ISA/210 (second sheet) (July 2022)

**INTERNATIONAL SEARCH REPORT**
Information on patent family members

| International application No. |
| --- |
| **PCT/CN2022/106587** |

| Patent document cited in search report | | | Publication date (day/month/year) | Patent family member(s) | | | Publication date (day/month/year) |
| --- | --- | --- | --- | --- | --- | --- | --- |
| CN | 114599086 | A | 07 June 2022 | None | | | |
| CN | 113542162 | A | 22 October 2021 | None | | | |
| CN | 114325679 | A | 12 April 2022 | None | | | |
| US | 2021286045 | A1 | 16 September 2021 | EP | 4107542 | A1 | 28 December 2022 |
| | | | | WO | 2021180210 | A1 | 16 September 2021 |
| | | | | US | 11474197 | B2 | 18 October 2022 |
| | | | | CN | 115280176 | A | 01 November 2022 |
| WO | 2021237495 | A1 | 02 December 2021 | None | | | |

Form PCT/ISA/210 (patent family annex) (July 2022)